# EUROPÄISCHE PATENTANMELDUNG

(11) **EP 4 345 716 A1**
(43) Veröffentlichungstag der Anmeldung: **03.04.2024**
(21) Anmeldenummer: 22198068.3
(22) Anmeldetag: 27.09.2022
(51) Int. Cl.: G06Q 10/0836, G06Q 50/28

(54) **VERFAHREN, LAGEREINRICHTUNG UND LOGISTIKSYSTEM ZUR ÜBERGABE EINER VIELZAHL VON PAKETEN AN MEHRERE EMPFÄNGER UND/ODER ZUR ENTGEGENNAHME EINER VIELZAHL VON PAKETEN VON MEHREREN EINLIEFERERN**

(71) Anmelder: reyopa UG, 52062 Aachen (DE)
(72) Erfinder: Klatt, Uwe, 52074 Aachen (DE); Wienand, Frank Paul, 52076 Aachen (DE)
(74) Vertreter: Jostarndt Patentanwalts-AG

(57) **Zusammenfassung**

Die Erfindung betrifft ein Verfahren zur Übergabe einer Vielzahl von Paketen (200) an mehrere Empfänger und/oder zur Entgegennahme von Paketen mehrerer Einlieferer, wobei bei einem Bestellvorgang des Paketes Empfängeridentifikationsangaben erfasst werden. Erfindungsgemäß zeichnet sich dieses System dadurch aus, dass bei dem einem Bestellvorgang eines der Pakete (des Paketes; 200) zwei voneinander unabhängige Empfängeridentifikationsangaben (110, 120) erfasst und hinterlegt werden, und dass eine Prüfungseinheit mit einem Prüfungsschritt überprüft, ob der Einmalcode der finalen Lagereinrichtung (210, 310) und der Einmalcode des Benutzerendgerätes des finalen Empfängers (220, 320) übereinstimmen, dass die Prüfungseinheit damit den Einmalcode des finalen Empfängers (220, 320) überprüft und dass bei einer erfolgreichen Überprüfung des Einmalcodes eine Übergabe des Pakets autorisiert wird.

Die Erfindung betrifft ferner ein Logistiksystem und dessen zur Durchführung dieses Verfahrens.

## Beschreibung

Die vorliegende Erfindung betrifft ein Verfahren und ein System zur Übergabe einer Vielzahl von Paketen an mehrere Empfänger und/oder zur Entgegennahme einer Vielzahl von Paketen von mehreren Einlieferern.

### Darstellung des Standes der Technik

Im Stand der Technik sind Systeme bekannt, welche es ermöglichen, eine Vielzahl von Paketen an eine Vielzahl von Empfängern auszuliefern bzw. Pakete von einer Vielzahl von Versendern entgegenzunehmen.

Aus zahlreichen Presse-Veröffentlichungen ist bekannt, dass die Zustellung hierbei nicht immer reibungslos funktioniert. Vielmehr erreicht ein Großteil der Pakete beim ersten Zustellversuch durch einen Logistik-Dienstleister nicht den tatsächlichen Empfänger. Dies bedeutet zusätzlichen Aufwand für den Empfänger eines Pakets und zeitgleich zusätzliche Kosten für den Logistik-Dienstleister. Zudem kommen Pakete abhanden oder werden erst mit erheblicher Verspätung zugestellt.

Aus der Europäischen Patentschrift EP 1 438 641 B1 ist eine elektronische Paketfachanlage mit einer Vielzahl von elektronischen Paketfächern bekannt, wobei jeweils mehreren elektronischen Paketfächern eine Bedienungseinheit zugeordnet ist.

Diese bekannte elektronische Paketfachanlage zeichnet sich dadurch aus, dass eine Zentralsteuereinheit zur Steuerung der Bedienungseinheiten vorgesehen ist, wobei die Zentralsteuereinheit ein Mittel zu einer veränderbaren Zuordnung der Paketfächer zu den Bedienungseinheiten enthält.

Aus der internationalen Patentanmeldung WO2022106598 ist bereits ein Verfahren bekannt, mit dem eine Vielzahl von Paketen an eine Vielzahl von Empfängern effizient, zuverlässig, flexibel mit möglichst geringem ökologischem Fußabdruck übergeben werden können. Ferner wird in dieser Patentanmeldung ein für die Durchführung dieses Verfahrens geeignetes System offenbart.

Das in der WO2022106598 vorgestellte Logistiksystem enthält eine zentrale Steuerkomponente, die so ausgestaltet, ist, dass sie Bearbeitungsvorgänge der Pakete steuert.

In der WO2022106598 sind auch mehrere Maßnahmen zur Erhöhung der Datensicherheit offenbart, beispielsweise, dass die Benutzerkomponente mit einem gegen unberechtigte Zugriffe besonders geschützten Speichermittel zur Speicherung von Datenschutzanforderungen eines Benutzers der Benutzerkomponente zusammenwirken kann, dass die Datenschutzanforderungen des Benutzers eine ortsabhängige Festlegung, welche Lokalisierungsinformationen zur Lokalisierung der Benutzerkomponente an das System übermittelt werden, beinhalten, dass der Prozessor eine Auswertung vornimmt, in welchem Umfang und/oder mit welcher Genauigkeit eine Übermittelung der Lokalisierungsinformationen den Datenschutzanforderungen des Benutzers entspricht und dass eine Übermittlung der Lokalisierungsinformationen an das System nur in dem Umfang und/oder mit der Genauigkeit erfolgt, die den Datenschutzanforderungen des Benutzers entspricht.

### Kurzdarstellung der Erfindung

Der vorliegenden Erfindung liegt die Aufgabe zu Grunde, ein weiteres Verfahren und ein weiteres Logistiksystem bereitzustellen, bei dem gleichfalls eine Vielzahl von Paketen an eine Vielzahl von Empfängern effizient, zuverlässig, flexibel mit möglichst geringem ökologischem Fußabdruck übergeben werden können und bei dem die Datensicherheit weiter erhöht wird.

Erfindungsgemäß wird diese Aufgabe durch ein Verfahren, eine Lagereinrichtung und durch ein System gemäß den unabhängigen Ansprüchen gelöst.

Hierdurch wird ein Verfahren bereitgestellt, mit dem eine Vielzahl von Paketen an eine Vielzahl von Empfängern effizient, zuverlässig und flexibel übergeben werden können. Ferner wird erfindungsgemäß eine für die Durchführung dieses Verfahrens geeignete Lagereinrichtung sowie ein für die Durchführung dieses Verfahrens geeignetes System bereitgestellt.

Vorteilhafte Weiterbildungen der Erfindung sind Gegenstand der abhängigen Ansprüche.

### Darstellung der Erfindung

Die vorliegende Anmeldung ist Teil eines übergreifenden Konzepts, dessen Ziel es ist, Pakete mit möglichst geringem ökologischem Fußabdruck und möglichst hoher Datensicherheit mit weiter verbessertem Schutz von Persönlichkeitsrechten an Empfänger zu übergeben.

Als Bestandteil dieses Konzepts werden Verfahren, Lagereinrichtungen und Logistiksysteme zur Übergabe einer Vielzahl von Paketen an mehrere Empfänger und/oder zur Entgegennahme von Paketen mehrerer Einlieferer offenbart.

Insbesondere sieht die Erfindung vor, ein Verfahren zur Übergabe einer Vielzahl von Paketen an mehrere Empfänger und/oder zur Entgegennahme von Paketen mehrerer Einlieferer, wobei bei einem Bestellvorgang des Paketes Empfängeridentifikationsangaben erfasst werden, so durchzuführen, dass bei dem einem Bestellvorgang eines der Pakete (nachfolgend des Paketes) zwei voneinander unabhängige Empfängeridentifikationsangaben erfasst und hinterlegt werden, wobei eine der Empfängeridentifikationsangaben eine Empfängeridentifikationsangabe einer Lagereinrichtung ist und wobei eine andere Empfängeridentifikationsangabe eine Empfängeridentifikationsangabe eines erstbestimmten Empfängers ist, dass wenigstens ein Bearbeitungsvorgang des Pakets unter Berücksichtigung der Empfängeridentifikationsangabe der Lagereinrichtung erfolgt, dass das Paket zu einer finalen Lagereinrichtung transportiert, in der finalen Lagereinrichtung gelagert und zur Vorbereitung einer Übergabe des Pakets bereitgestellt wird, dass ein Benutzerendgerät eines finalen Empfängers einen Einmalcode des Benutzerendgeräts unter Berücksichtigung einer Empfängeridentifikationsangabe des finalen Empfängers, eines Standortes der finalen Lagereinrichtung und eines Zeitstempels des Übergabezeitpunktes bildet, dass die Lagereinheit mit einer Prüfungseinheit verbindbar ist, dass die Prüfungseinheit einen Einmalcode der finalen Lagereinrichtung unter Berücksichtigung der Empfängeridentifikationsangabe des finalen Empfängers, des Standortes der finalen Lagereinrichtung und des Zeitstempels des Übergabezeitpunktes bildet, dass die mit einem Prüfungsschritt überprüft, ob der Einmalcode der finalen Lagereinrichtung und der Einmalcode des Benutzerendgerätes des finalen Empfängers übereinstimmen, damit den Einmalcode des finalen Empfängers überprüft und dass bei einer erfolgreichen Überprüfung des Einmalcodes eine Übergabe des Pakets autorisiert wird.

Eine bevorzugte Ausführungsform der Erfindung sieht vor, dass das Verfahren mit mehreren Bearbeitungskomponenten durchgeführt wird, und dass die Empfängeridentifikationsangabe des Empfängers so gestaltet ist, dass sie keine direkten Rückschlüsse auf eine Identität des Empfängers ermöglicht.

Die Empfängeridentifikationsangaben können von dem Empfänger-gegebenenfalls unter Berücksichtigung von vorgebbaren Codeparametern - gewählt werden. In einer ersten Ausführungsform gibt der Besteller die Empfängeridentifikationsangaben bei einem Bestellprozess ein. In anderen Ausführungsformen wird wenigstens ein Teil der Empfängeridentifikationsangaben an ein Logistiksystem übermittelt.

Eine zweckmäßige Weiterbildung der Erfindung zeichnet sich dadurch aus, dass ein Überprüfungsschritt erfolgt, in dem überprüft wird, ob ein Transport des Pakets zu der Lagereinrichtung, deren Empfänger Identifikationsangaben bei dem Bestellvorgang des Pakets erfasst wurden als finaler Lagereinrichtung erfolgt, erfolgen soll, oder ob der Transport des Pakets zu einer anderen Lagereinrichtung als finale Lagereinrichtung erfolgen soll.

Eine bevorzugte Ausführungsform der Erfindung sieht vor, dass anstelle des Empfängers, dessen Empfängeridentifikationsangaben bei dem Bestellvorgang erfasst wurden, ein anderen Empfänger als dieser Empfänger finaler Empfänger des Pakets ist. Hierzu werden, insbesondere an die Lagereinrichtung Empfängeridentifikationsangaben des finalen Empfängers übermittelt.

Eine bevorzugte Ausführungsform der Erfindung sieht vor, dass der finale Empfänger eine Übergabeeinheit ist, die das Paket an der Lagereinrichtung in Empfang nehmen und zu einer Zieladresse (hier müssen wir noch auf die Terminologie achten) transportieren kann.

Eine bevorzugte Ausführungsform der Erfindung sieht vor, dass durch ein selbstlernendes System erwartete Aufenthaltsorte des finalen Empfängers ermittelt werden, dass Wegstrecken zwischen den erwarteten Aufenthaltsorten des finalen Empfängers und wenigstens zwei Lagereinrichtungen ermittelt wird und dass die Lagereinrichtung, für welche die Wegstrecke zwischen dem erwarteten Aufenthaltsort des finalen Empfängers und dem Standort der Lagereinrichtung am geringsten ist als finale Lagereinrichtung ausgewählt wird.

Eine bevorzugte Ausführungsform der Erfindung sieht vor, dass im Bereich einer Lagereinrichtung eine zusätzliche lokalen Logistik vorgesehen ist, so dass zusätzlich zu den für die Übergabe an den gemeinsamen Übergabepunkten vorgesehenen Paketen Warenobjekte in die Lagereinrichtung eingeliefert, eingelagert und als Pakete übergeben werden können.

Eine bevorzugte Ausführungsform der Erfindung sieht vor, dass für möglichst viele Pakete, vorzugsweise für jedes Paket, ein Paketidentifikationscode vergeben und/oder erfasst wird und anschließend als primäres Paketidentifikationsmerkmal gespeichert wird, dass dem Paket ein Empfängeridentifikationsangabe der finalen Lagereinrichtung als sekundäres Paketidentifikationsmerkmal zugeordnet wird, und dass wenigstens ein Bearbeitungsvorgang des Pakets anhand des sekundären Paketidentifikationsmerkmals durchgeführt wird.

Insbesondere wird im Fall einer erfolgreichen Überprüfung des Einmalcodes eine Übergabe bewirkt.

Gegenstand der Erfindung ist ferner eine Lagereinrichtung, insbesondere zur Verwendung in einem der in dieser Anmeldung dargestellten Verfahren, die sich dadurch auszeichnet, dass die Lagereinrichtung mit einem Zuordnungsmittel für eine Zuordnung von Empfängeridentifikationsangaben des finalen Empfängers zu den Lagerpositionen verbindbar ist.

Ein weiterer Gegenstand der Erfindung ist ein System zur Übergabe einer Vielzahl von Paketen an mehrere Empfänger und/oder zur Entgegennahme einer Vielzahl von Paketen von mehreren Einlieferern, das aufweist:
- Eine Bestellkomponente zur Erfassung und Hinterlegung von zwei voneinander unabhängige Empfängeridentifikationsangaben (110, 120) einer Lagereinrichtung und eines Empfängers;
- Wenigstens einen Einlieferungspunkt;
- Eine Vielzahl von Lagereinrichtungen;
- Eine Bearbeitungskomponente (230), die wenigstens einen Bearbeitungsvorgang (130) eines Paketes (200) unter Berücksichtigung der Empfängeridentifikationsangabe (110) der Lagereinrichtung (210) durchführen kann,
- Eine Prüfungseinheit, die so eingerichtet ist, dass sie einen Einmalcode der finalen Lagereinrichtung (210,310) unter Berücksichtigung der Empfängeridentifikationsangabe des finalen Empfängers (220,320), des Standortes der finalen Lagereinrichtung (210, 310) und des Zeitstempels des Übergabezeitpunktes bilden kann.

Anstelle von absoluten Ortsangaben ist es gleichfalls möglich, einen relativen Abstand zwischen der finalen Lagereinrichtung und dem finalen Empfänger zu bestimmen, beispielsweise mittels NFC oder Bluetooth.

Ebenso ist es zweckmäßig, einen aktuellen Zeitstempel, gegebenenfalls normalisiert auf einen Zeitbereich; gegebenenfalls mit einem confidence Intervall bei der Bildung des Einmalcodes zu berücksichtigen. Da sehr genaue Zeitmessungen möglich sind, ist ein großes Zeitintervall nicht erforderlich.

Ferner erfolgt vorzugsweise eine Authentifizierung der Empfänger durch ein Authentifizierungsmodul.

Dies ist beispielsweise dann möglich, wenn ein Empfänger, der Benutzer einer App ist, diese so konfiguriert hat, dass bereits seine Annäherung an eine Lagereinrichtung einen Übergabevorgang initiiert.

Es ist zweckmäßig, ein Authentifizierungsmodul für einen Austausch von Authentifizierungsinformationen mit der Benutzerkomponenten des Empfängers und/oder einer App, insbesondere der Benutzer-App bereitzustellen, so dass eine Authentifizierung des Benutzers erleichtert wird.

Das Authentifizierungsmodul wirkt vorzugsweise mit der Steuerkomponente und/oder mit der lokalen Steuereinheit zusammen.

Die Annäherung des Empfängers an die Lagereinrichtung kann mittels verschiedener Standortbestimmungssysteme einschließlich satellitenbasierten Positionsbestimmungssystemen, Lokalisierung über ein Mobilfunknetz, ein WLAN und/oder über NFC festgestellt werden, wobei derartige Lokalisierungsmethoden teilweise Ortsgenauigkeiten im cm-Bereich ermöglichen. Sobald der Empfänger sich nun innerhalb eines Nahfeldradius in der Größenordnung von beispielsweise 5m bis 50m, vorzugsweise 10m bis 20m Radius der entsprechenden Lagereinrichtung nähert, registriert dies die Lagereinrichtung selbstständig zum Beispiel via Near Field Communication (NFC), und/oder die Steuerkomponente des Logistiksystems registriert dies aufgrund von empfangenen Lokalisierungsinformationen des Empfängers, die beispielsweise mittels GPS-Daten oder Ortung innerhalb eines mobilen Kommunikationsnetzes ermittelt werden.

Nachdem die Nähe des finalen Empfängers zu der Lagereinrichtung festgestellt wurde, erhält seine Benutzer-App und/oder Benutzerkomponente eine Benachrichtigung. Nach dem Empfangen der Benachrichtigung wird die Benutzer-App und/oder die Benutzerkomponente in einen anderen Betriebszustand gebracht, insbesondere aktiviert. Dies kann ebenfalls standalone durch die Lagereinrichtung oder über das Logistiksystem, vorzugsweise die Steuerkomponente des Logistiksystems geschehen.

Vorzugsweise erhält der finale Empfänger nun von der Benutzer-App und/oder der Benutzerkomponente eine Abfrage, ob er jetzt unmittelbar das Paket aus der Lagereinrichtung entnehmen möchte. Bestätigt der Empfänger den Wunsch zur Entnahme, so wird er gebeten sich via App zu authentifizieren (z.B. via touch ID, oder Passworteingabe etc.). Auch die Authentifizierung kann wiederum standalone durch die Lagereinrichtung erfolgen und/oder durch die Steuerkomponente des Logistiksystems. Sofern die Authentifizierung positiv ist, der Empfänger sich zudem unmittelbar an der Lagereinrichtung befindet (beispielsweise maximal 2m entfernt) und eine Übergabe des Pakets möglich ist, so wird die Übergabe des Paketes durch die Lagereinrichtung eingeleitet.

Vorzugsweise erfolgt eine Authentifizierung der Empfänger durch ein Authentifizierungsmodul.

Dies ist beispielsweise dann zweckmäßig, wenn ein Empfänger, der Benutzer einer App ist, diese so konfiguriert hat, dass bereits seine Annäherung an die finale Lagereinrichtung einen Übergabevorgang initiiert.

Es ist zweckmäßig, ein Authentifizierungsmodul für einen Austausch von Authentifizierungsinformationen mit der Benutzerkomponente des Empfängers und/oder einer App, insbesondere der Benutzer-App bereitzustellen, so dass eine Authentifizierung des Benutzers erleichtert wird.

Das Authentifizierungsmodul wirkt vorzugsweise mit der Steuerkomponente und/oder mit der lokale Steuereinheit zusammen.

### (Lokale) Steuereinheit zur Übergabe von Paketen

### Funktionen klären: Lagerung Authentifizierung, Übergabe

Der Begriff Logistiksystem bezeichnet in dieser Anmeldung ein System, das wenigstens einen der folgenden Bearbeitungsvorgänge an Gegenständen, insbesondere Paketen vornehmen kann:
- Übergabe, insbesondere Einlieferung und/oder Ausgabe
- Transport
- Sortierung
- Lagerung
- Kommissionierung.

Vorzugsweise handelt es sich um ein Logistiksystem, mit mehreren Logistikknoten, an denen logistische Bearbeitungsvorgänge erfolgen können.

In dieser Anmeldung werden unter Paketen beliebige körperliche Gegenstände verstanden, die transportiert werden können und vorzugsweise bestimmte Abmessungen und/oder ein bestimmtes Gewicht nicht überschreiten.

Dabei kommen Gegenstände des täglichen Bedarfs wie Verbrauchsmaterialien oder Lebensmittel ebenso in Frage wie technische Gegenstände und Gerätschaften. Bei den Paketen handelt es sich um unverpackte Gegenstände, verpackte Gegenstände und umverpackte Gegenstände, wobei bei verpackten und umverpackten Gegenständen das Paket die Verpackung bzw. Umverpackung und den darin verpackten Gegenstand umfasst. Ebenso ist es zweckmäßig, unverpackte Gegenstände, insbesondere Warenobjekte erfindungsgemäß zu bearbeiten. Briefsendungen sowie Werbematerialien und -prospekte sind gegebenenfalls auch Pakete im Sinne dieser Anmeldung.

Sofern Pakete in der vorliegenden Anmeldung nicht ausdrücklich als Datenpakete oder virtuelle Pakete bezeichnet werden, handelt es bei den in dieser Anmeldung dargestellten Paketen um physische Pakete.

Warenobjekte sind physische Gegenstände, die physisch an Empfänger übergeben und/oder von Einlieferern angenommen werden können.

Die Übergabe der Pakete, insbesondere der Vielzahl von Paketen erfolgt insbesondere als eine Einlieferung und/oder als eine Ausgabe der Pakete.

Die vorliegende Anmeldung betrifft Übergaben von Paketen an Empfänger und/oder Übergaben von Paketen durch Einlieferer. Sofern nicht jeweils spezifiziert ist, dass es sich um eine Übergabe an einen Empfänger handelt sind auch Übergaben von einem Einlieferer mit umfasst. Ebenso ist dann, wenn nicht jeweils spezifiziert ist, dass es sich um eine Übergabe durch einen Einlieferer handelt, auch eine Übergabe an einen Empfänger mit umfasst. Übergaben durch einen Einlieferer werden in der vorliegenden Anmeldung auch als Einlieferung oder als Annahme bezeichnet, Übergaben an Empfänger auch als Auslieferung.

Empfänger im Sinne der vorliegenden Erfindung sind Einheiten, an die Lagereinrichtung Pakete oder sonstige Gegenstände übergibt, beziehungsweise übergeben kann. Sowohl natürliche Personen als auch technische Einheiten können Empfänger im Kontext der vorliegenden Anmeldung sein.

Einlieferer im Sinne der vorliegenden Anmeldung sind Einheiten, die Pakete oder sonstige Gegenstände an das Logistiksystem beziehungsweise eine Komponente des Logistiksystems übergeben, beziehungsweise übergeben können. Sowohl natürliche Personen als auch technische Einheiten können Einlieferer im Kontext der vorliegenden Anmeldung sein. Natürliche Personen oder technische Einheiten, die Pakete für einen Transportvorgang an das Logistiksystem übergeben, werden im Kontext der vorliegenden Anmeldung auch als Versender bezeichnet. Versender bezeichnet insbesondere solche Einlieferer, die einen Transport von Paketen, gegebenenfalls einschließlich einer Abholung, beauftragen. Die vorliegende Anmeldung umfasst Ausführungsformen, bei denen die Einlieferer von Paketen Versender sind, mit.

Es ist möglich, die in dieser Anmeldung dargestellten Übergabepunkte als individuelle Übergabepunkte zu nutzen. Als individuelle Übergabepunkte sind auch Übergabepunkte möglich, an denen Übergaben von Paketen für einen definierbaren Personenkreis von Empfängern und/oder Einlieferern erfolgen.

Beispiele für einen Einsatz individueller Übergabepunkte sind Standorte für Lagereinrichtungen, die so eingerichtet sind, dass Übergaben von Paketen ausschließlich für einen definierbaren Personenkreis von Empfängern und/oder Einlieferern erfolgen.

Definierbare Personenkreise können - insbesondere durch den Einsatz der Steuerkomponente - variabel festgelegt werden. So ist es möglich, Lagereinrichtungen bereitzustellen, die nur einer begrenzten Anzahl von Einlieferern, einschließlich eines einzelnen Einlieferers, der Lagereinrichtung und/oder vom Logistiksystem ausschließlich ihm zugeordneten Einlieferern und/oder Empfängern zugänglich gemacht werden.

Ferner ist es möglich, die Lagereinrichtung als ein Warenoutlet einzusetzen, mittels dessen Warenobjekte an Empfänger übergeben werden. Dies geschieht in einer bevorzugten Ausführungsform der Erfindung dadurch, dass Warenobjekte in die Lagereinrichtung eingeliefert, eingelagert und als Pakete an Empfänger übergeben werden.

Die Lagereinrichtung kann selbst als Übergabeeinrichtung ausgebildet sein oder Funktionen einer Übergabeeinrichtung realisieren oder auch eine Übergabeeinrichtung aufweisen, die insbesondere in einem Betriebszustand der Lagereinrichtung als eine Schleuse ausgebildet sein kann.

Die Lagereinrichtungen können als individuelle Übergabepunkte für einzelne Pakete, als gemeinsame Übergabepunkte für mehrere Pakete oder als gemeinsame optimierte Übergabepunkte für eine Vielzahl von Paketen ausgebildet sein.

Zur Steuerung logistischer Prozesse wird erfindungsgemäß wenigstens eine der Empfängeridentifikationsangaben eingesetzt. Die Empfängeridentifikationsangabe enthält Angaben zur Identifizierung wenigstens einer Lagereinrichtung, insbesondere der finalen Lagereinrichtung.

Es ist zweckmäßig, dass wenigstens eins, vorzugsweise mehrere der folgenden Empfängeridentifikationsangaben zur Steuerung von jeweils wenigstens einem Bearbeitungsvorgang des Logistiksystems eingesetzt werden:
- Empfängeridentifikationsangabe eines ersten vorgesehenen Empfängers eines Pakets, nachfolgend erstbestimmter Empfänger genannt;
- Empfängeridentifikationsangabe eines finalen Empfängers eines Pakets;
- Empfängeridentifikationsangabe einer ersten vorgesehenen Lagereinrichtung;
- Empfängeridentifikationsangabe einer finalen Lagereinrichtung.

Zweckmäßigerweise werden die Empfängeridentifikationsangaben so verschlüsselt, dass wenigstens ein Teil von Komponenten des Logistiksystems beziehungsweise bei mehreren Logistiksystemen wenigstens ein Logistiksystems die Empfängeridentifikationsangabe wenigstens eines der Empfänger nicht entschlüsseln kann.

Hierdurch wird sichergestellt, dass wenigstens ein Logistiksysteme nicht die Identität oder andere personenbezogene Angaben des anderen Logistiksystems, beziehungsweise die anderen Logistiksysteme kennt.

Der erstbestimmte Empfänger registriert sich bei einer Autorisierungseinheit und erhält eine ihm zugeordnete eindeutige Empfängeridentifikationsangabe.

Auch die Lagereinrichtungen werden registriert und erhalten gleichfalls jeweils eine eindeutige Empfängeridentifikationsangabe.

Der finale Empfänger kann sich bei einer Autorisierungseinheit registrieren und gleichfalls eine ihm zugeordnete eindeutige Empfängeridentifikationsangabe erhalten.

Alternativ kann der erstbestimmte Empfänger den finale Empfänger bei der Autorisierungseinheit registrieren und/oder die Autorisierungseinheit veranlassen, dem finalen Empfänger gleichfalls eine ihm zugeordnete eindeutige Empfängeridentifikationsangabe zuzuordnen. Ein Einsatz mehrerer Logistiksysteme hat den Vorteil, dass wenigstens ein Logistiksystem keine Informationen, die eine Identifikation des erstbestimmten Empfängers und/oder des finalen Empfängers ermöglichen, erhält und so die Identität des erstbestimmten Empfängers und/oder des finalen Empfängers weitaus besser geschützt wird, als bei konventionellen Logistiksystemen.

Ferner ist es möglich, Empfänger so zu autorisieren, dass ihre Identität weder einem ersten Logistiksystem als auch einem zweiten Logistiksystem und/oder einem Betreiber der Lagereinrichtung zugänglich sind.

Bei der Benutzerkomponente handelt es sich beispielsweise um ein Smartphone, eine Smartwatch oder um eine smarte Brille. Insbesondere ist die Benutzerschnittstelle so ausgebildet, dass sie eine Übergabe von Paketen veranlassende und/oder die Übergabe der Pakete verbessernde Informationen übermitteln kann. Beispiele für die übermittelbaren Informationen sind Paketidentifikationsmerkmale, Benutzeridentifikationsmerkmale, Authentifizierungsdaten und Benachrichtigungsinformationen.

Nachfolgend wird dargestellt, wie aus mehreren Lagereinrichtungen bevorzugte Lagereinrichtungen als individuelle Übergabepunkte für einzelne Pakete, als gemeinsame Übergabepunkte für mehrere Pakete oder als gemeinsame optimierte Übergabepunkte für eine Vielzahl von Paketen ausgewählt werden.

Es ist besonders zweckmäßig, dass für mehrere Pakete aus einer Vielzahl möglicher räumlich voneinander getrennter Übergabepunkte unter Berücksichtigung wenigstens eines Aufwandsparameters wenigstens eines jeweiligen Empfängers und/oder wenigstens eines jeweiligen Einlieferers ein gemeinsamer optimierter Übergabepunkt für die Übergabe an die jeweiligen Empfänger und/oder Einlieferer innerhalb eines bestimmten Übergabezeitraums ermittelt wird.

Durch den Aufwandsparameter erfolgt eine Berücksichtigung des Aufwandes für die jeweiligen Empfänger und/oder Einlieferer von Paketen für eine Übergabe des jeweiligen Paketes, insbesondere für Übergaben an gemeinsamen optimierten Übergabepunkten.

Die vorliegende Erfindung schlägt zahlreiche Ausführungsformen vor, bei denen der Aufwandsparameter für die Empfänger und/oder Einlieferer verringert, insbesondere begrenzt wird, wobei ein möglichst geringer, insbesondere ein möglichst begrenzter, Aufwandsparameter für möglichst viele Empfänger und/oder Einlieferer von Paketen besonders vorteilhaft ist.

Die Berücksichtigung des Aufwandparameters kann direkt oder indirekt erfolgen. Eine indirekte Berücksichtigung des Aufwandparameters erfolgt insbesondere über einen der in dieser Anmeldung dargestellten Scoringwerte. Bei den Scoringwerten handelt es sich vorzugsweise um Werte mit unterschiedlichen Dimensionen wie insbesondere der Quantifizierung eines Aufwandes, die mit dem Hilfsmittel des Scorings auf eine Kennzahl reduziert werden können.

Der Aufwandsparameter beinhaltet vorzugsweise eine oder mehrere der folgenden Komponenten des Aufwandes für die jeweiligen Empfänger und/oder Einlieferer von Paketen:
- Zusätzliche Wegstrecke für ein Erreichen des gemeinsamen optimierten Übergabepunktes;
- Zusätzlicher Zeitaufwand für das Erreichen des gemeinsamen optimierten Übergabepunktes;
- Wahrscheinlichkeit, dass der Empfänger beziehungsweise Einlieferer des Pakets sich in der Nähe des Übergabepunktes befindet;
- Aufwand, ein Paket bestimmter Größe oder eines bestimmten Gewichtes vom Übergabepunkt, insbesondere vom gemeinsamen optimierten Übergabepunkt zur Heimatadresse und/oder einem Ort der Verwendung (des Pakets) zu verbringen.

Besonders bevorzugt ist die Optimierung für jeden einzelnen der Übergabezeiträume, so dass für unterschiedliche Übergabezeiträume unterschiedliche Übergabepunkte, insbesondere mindestens teilweise unterschiedliche gemeinsame optimierte Übergabepunkte für die Übergaben der Pakete eingesetzt werden können.

Während in bekannten Logistiksystemen eine Definierung alternativer Zieladressen für den Fall erfolgt, dass eine Übergabe an einem gewünschten Übergabepunkt nicht möglich ist, sieht die Erfindung eine Einbeziehung weiterer Parameter, insbesondere der Aufwandsparameter, vor. Durch die Einbeziehung der Aufwandsparameter wird nicht nur der Aufwand für die Übergabe der Pakete verringert, sondern auch gegenüber einem Verfahren ohne Berücksichtigung des Aufwandsparameter die Wahrscheinlichkeit einer erfolgreichen Übergabe erhöht.

Ein besonders bevorzugter Bestandteil des Aufwandsparameter ist bei einer vorteilhaften Weiterbildung der Erfindung die Berücksichtigung von Wahrscheinlichkeiten, dass der Empfänger des Pakets sich innerhalb eines Übergabezeitraumes an einem der Übergabepunkte oder in Nähe eines der Übergabepunkte befindet und/oder von einem erwarteten Zusatzaufwand des Empfängers für die Erreichung des Übergabepunktes und gegebenenfalls bei einer vorteilhaften Weiterbildung der Erfindung auch für einen Transport des Pakets von dem Übergabepunkt zu einem von dem Empfänger gewünschten Zielort.

In der vorliegenden Anmeldung wird die Bezeichnung Übergabepunkt für einen geografisch präzise definierbareren Ort gewählt, der sich besonders gut dafür eignet, dass an ihm wenigstens ein Paket übergeben werden kann. Übergabepunkte sind Orte, an denen Übergaben von Paketen erfolgen können. Gemeinsame Übergabepunkte sind Orte, an denen Übergaben mehrerer Pakete erfolgen können, insbesondere innerhalb eines Übergabezeitraums. Übergabepunkte, die durch einen Benutzer und/oder das Logistiksystem ausgewählt werden, werden als ausgewählte Übergabepunkte bezeichnet. Die Auswahl kann unmittelbar und/oder mittelbar, insbesondere unter Berücksichtigung der in dieser Anmeldung offenbarten Auswahlverfahren für Übergabepunkt erfolgen. Ausgewählte Übergabepunkte können insbesondere folgende der in dieser Anmeldung offenbarten Übergabepunkte sein:
- individuelle Übergabepunkte
- gemeinsame Übergabepunkte
- gemeinsame optimierte Übergabepunkte.

Individuelle Übergabepunkte sind insbesondere Orte, an denen eine Übergabe eines Pakets für einen einzelnen Empfänger und/oder für einen einzelnen Einlieferer eines Pakets erfolgt. Individuelle Übergabepunkte sind somit Übergabepunkte für einen einzelnen Empfänger und/oder Einlieferer eines Pakets.

Die Berücksichtigung dieser Datenschutzregelungen ist keine rein administrative Tätigkeit, da sie eine unmittelbare Berücksichtigung einschließlich Auswahl und insbesondere Nicht-Auswahl von Übergabepunkten beinhaltet. So wird insbesondere vermieden, dass Übergaben an Übergabepunkten für einen Empfänger beziehungsweise Einlieferer initiiert werden, obwohl der jeweilige Empfänger beziehungsweise Einlieferer an diesem auszuschließenden Übergabepunkt eine Übergabe nicht wünscht.

Eine zweckmäßige Ausgestaltung der der Erfindung sieht vor, dass durch ein selbstlernendes System erwartete Aufenthaltsorte und/oder Wegstrecken der Empfänger/Einlieferer ermittelt werden, die für die Auswahl des gemeinsamen optimierten Übergabepunktes für wenigstens einen Teil der Empfänger und/oder Einlieferer berücksichtigt werden, so dass der ökologische Fußabdruck weiter reduziert wird.

Diese Berücksichtigung erfolgt insbesondere durch eine Implementierung eines lernenden beziehungsweise selbstlernenden Systems. Das selbstlernende System wird vorzugsweise durch ein neuronales Netz realisiert. Kalibrierungen, insbesondere Lernvorgänge des neuronalen Netzes erfolgen insbesondere unter Einbeziehung der in dem Artikel "Drei nützliche Instrumente, um Ihr maschinell lernendes System zu evaluieren"
https://medium.com/@turicodeag/drei-n%C3%BCtzliche-instrumente-um-ihr-maschinell-lernendes-system-zu-evaluieren-cd8fa92d82a1 dargestellten Evaluationsinstrumente. Die in diesem Artikel dargestellten relevanten Datenpunkte entsprechen vorzugsweise den Übergabepunkten im Sinne dieser Anmeldung.

Eine bevorzugte Weiterbildung der Erfindung zeichnet sich dadurch aus, dass die Auswahl des Übergabepunktes und die Übergabe an den jeweiligen Empfänger und/oder die Übergabe durch die Einlieferer, wobei mehrere der Empfänger und/oder Einlieferer in einem ersten und einem zweiten Übergabezeitraum andere Aufenthaltsorte haben und/oder andere Wegstrecken zurücklegen, unter Berücksichtigung einer Wegstrecke zwischen den angegebenen Aufenthaltsorten erfolgt, die vom Empfänger und/oder vom Einlieferer vorab mitgeteilt wurde oder durch einen Routenalgorithmus abgeschätzt wird.

Eine bevorzugte Weiterbildung der Erfindung zeichnet sich dadurch aus, dass die Ermittlung des Übergabepunktes als ein mehrstufiger Prozess mit mehreren Auswahlschritten erfolgt und dass vor einem Auswahlschritt, der Aufwandsparameter für die Empfänger und/oder die Einlieferer berücksichtigt, mindestens ein anderer Auswahlschritt unter Berücksichtigung mindestens eines Eignungsparameters erfolgt und dass mindestens ein weiterer Auswahlschritt erfolgt.

Vorteilhafte Weiterbildungen der Erfindung beinhalten eine Berücksichtigung weiterer Parameter, insbesondere eines Eignungsparameters für die Auswahl des Übergabepunktes. Der Eignungsparameter ist ein quantifizierter Parameter, der Insbesondere eine Geeignetheit, insbesondere Verfügbarkeit des Übergabepunktes berücksichtigt.

Eine zweckmäßige Ausgestaltung der der Erfindung sieht vor, dass eine Steuerkomponente das Verfahren steuert.

Die Steuerkomponente ist insbesondere eine zentrale Komponente eines der in dieser Anmeldung dargestellten Logistiksysteme. Vorzugsweise ist die Steuerkomponente so ausgestaltet, dass sie möglichst viele oder sogar sämtliche der Bearbeitungsvorgänge der Pakete steuert. Es ist jedoch gleichfalls möglich, dass die Steuerkomponente lediglich einzelne der in dieser Anmeldung dargestellten Verfahrensschritte steuert.

Die Steuerkomponente des Logistiksystems kann so ausgestaltet sein, dass die Steuerkomponente einzelne oder mehrere oder sogar sämtliche der in dieser Anmeldung dargestellten Verfahren durchführen kann.

Paketidentifikationsmerkmale dienen zur zuverlässigen Identifizierung von Paketen, vorzugsweise zur eindeutigen Identifizierung von Paketen. Im Kontext der vorliegenden Anmeldung wird in bevorzugten Ausführungsformen der Erfindung zwischen unterschiedlichen Paketidentifikationsmerkmalen mit einer voneinander verschiedenen Eignung zur Identifizierung von Paketen unterschieden. In Abhängigkeit von der Eignung zur Identifizierung der Pakete wird zwischen primären Paketidentifikationsmerkmalen und sekundären Paketidentifikationsmerkmalen unterschieden.

Ein Paketidentifikationsmerkmal ist ein eindeutiges Datenelement, das physisch und/oder virtuell dem Paket zugeordnet ist und seine zuverlässige Identifikation, insbesondere seine eindeutige Identifikation ermöglicht. Die zuverlässige Identifikation kann sich auf einen oder mehrere Verfahrensschritte oder auf den gesamten Logistikprozess von der Einlieferung eines Pakets bis zur Ausgabe des Pakets beziehen. Es ist besonders vorteilhaft, dass das Paketidentifikationsmerkmal sich auf den gesamten logistischen Prozess bezieht, jedoch ist auch der Einsatz des Paketidentifikationsmerkmals in weniger Verfahrensschritten als dem Gesamtverfahren von der Erfindung mit umfasst.

Ein Paketidentifikationsmerkmal beinhaltet vorzugsweise ein oder mehrere Merkmale, die alleine oder in Kombination miteinander und/oder in Kombination mit Informationen über einen oder mehrere Bearbeitungsvorgänge eines Pakets eine zuverlässige Identifikation des Pakets erlauben.

Paketidentifikationsmerkmale sind insbesondere
- Paketidentifikationscodes;
- Produktcodes;
- Versenderidentifikationsmerkmale;
- Einliefereridentifikationsmerkmale;
- Empfängeridentifikationsangaben;
- Gewicht des Pakets;
- Abmaße des Pakets;
- Form des Pakets;
- Farbe des Pakets bzw. der einzelnen Seiten des Paketes;
- Abbildung des Pakets, einschließlich eines durch eine Kameraeinheit aufgenommen Bildes des Pakets.

Ein besonders bevorzugter Einsatz des Empfängeridentifikationsangabe als Paketidentifikationsmerkmals unterscheidet sich signifikant von dem im Stand der Technik bekannten Einsatz von Zustellinformationen, insbesondere von bekannten Empfängeradressattributen, die im Stand der Technik eine physische Empfängeradresse beinhalten und so im Stand der Technik eine Identifikation des Empfängers ermöglichen. Die im Stand der Technik bekannten Zustellinformationen werden für die Steuerung von Bearbeitungsprozessen von Paketen eingesetzt. Insbesondere wird ein Paket, das in Hamburg aufgegeben wird und das für einen Empfänger in Aachen bestimmt ist, zwischen dem Abgabeort und dem Ausgabeort anhand der Zustellinformation so gesteuert, dass es insbesondere bei einem in der Nähe von Hamburg befindlichen Paketzentrum so sortiert wird, dass es in ein Transportmittel verbracht wird, das zu einem in der Nähe von Aachen befindliches Paketzentrum transportiert wird.

Ein besonders bevorzugter Einsatz von Paketidentifikationsmerkmalen geht hierüber weit hinaus. In einem Bearbeitungsvorgang, insbesondere bei einem Sortiervorgang oder mehreren Bearbeitungsvorgängen, gegebenenfalls sogar bei allen Verfahrensschritten, erfolgt eine Bearbeitung des Pakets unter Einbeziehung des Paketidentifikationsmerkmals. Das Paketidentifikationsmerkmal kann hierbei innerhalb von mehreren Stellen des Logistiksystems eingesetzt werden, so dass insbesondere bei einem Sortiervorgang in dem in der Nähe von Hamburg befindlichen Paketzentrum festgestellt wird, dass in einem von dem Empfänger gewünschten Übergabezeitraums der Empfänger sich in der Nähe von Frankfurt befindet. In diesem Fall erfolgt eine Bearbeitung des Pakets, insbesondere ein Sortiervorgang anhand des Paketidentifikationsmerkmals, insbesondere für einen möglichst schnellen und sicheren Transport zu einem der Übergabepunkte insbesondere in der Nähe von Frankfurt.

Insbesondere bei Ausführungsformen, bei dem mehrere Bearbeitungsvorgänge des Pakets erfolgen, ist es zweckmäßig, wenn das Paketidentifikationsmerkmal sowohl physisch als auch virtuell dem Paket zugeordnet ist.

Zur Erleichterung, beziehungsweise Ermöglichung der autonomen Handhabung von Paketen sind vorzugsweise einzelne, mehrere und besonders bevorzugt möglichst viele der in dieser Anmeldung dargestellten Bearbeitungseinheiten, insbesondere Lagereinrichtungen oder Transfereinrichtungen mit einem Mittel zum Erfassen von Paketidentifikationsmerkmalen der Pakete und zur Handhabung der Pakete entsprechend der Paketidentifikationsmerkmale ausgestattet.

Insbesondere die Handhabung der Pakete entsprechend der Paketidentifikationsmerkmale, und dabei insbesondere eine Einlagerung der Pakete in Lagerpositionen einer Lagereinrichtung der Lagereinrichtung unter Berücksichtigung der Paketidentifikationsmerkmale unterstützt eine autonome Handhabung der Pakete. Es ist insbesondere besonders vorteilhaft, die Transfereinrichtungen so auszugestalten, dass sie die autonome Handhabung der Pakete durchführen können. Zweckmäßige Maßnahmen zur autonomen Handhabung der Pakete betreffen insbesondere:
- Transport,
- Routing,
- Sortierung,
- Lagerung und
- Kommissionierung.

So ist es insbesondere möglich, einzelne, mehrere, besonders viele und gegebenenfalls sogar sämtliche der folgenden Bearbeitungsvorgänge autonom durchzuführen:
- kontaktlose Übergabe von Paketen;
- Handhabung von Paketen auf der Grundlage wenigstens eines Paketidentifikationsmerkmals;
- Übergabe mehrerer Pakete an einem gemeinsamen optimierten Übergabepunkt innerhalb eines Übergabezeitraums;
- Auswahlverfahren (Ermittlungsverfahren) für die Ermittlung des gemeinsamen optimierten Übergabepunktes;
- Einsatz von Lagereinrichtungen für die Lagerung von Paketen;
- Einsatz von Lagereinrichtungen für die Zwischenlagerung von Paketen, insbesondere auch in Verteilzentren;
- Einsatz von Lagereinrichtungen für die Kommissionierung von Paketen;
- Einsatz von Lagereinrichtungen als Verkaufseinrichtungen.

Ein Paketidentifikationscode ist insbesondere ein Code, der zur Identifikation des Pakets eingesetzt wird und der insbesondere physisch und/oder virtuell mit dem Paket verbunden ist, wobei es besonders vorteilhaft ist, wenn der Paketidentifikationscode auch physisch mit dem Paket verbunden ist. Dies gilt insbesondere dann, wenn der Paketidentifikationscode als ein Paketidentifikationsmerkmal beziehungsweise als eines der Paketidentifikationsmerkmale eingesetzt wird.

Eine zweckmäßige Ausgestaltung der der Erfindung sieht vor, dass folgende Datenelemente an die Lagereinrichtung übermittelt werden:
- Wenigstens eines der Paketidentifikationsmerkmale, das geeignet ist, eine zuverlässige Identifikation eines jeweiligen Pakets zu ermöglichen und
- eine Information zu einer Identifizierung der Lagerposition innerhalb der Lagereinrichtung der Lagereinrichtung, insbesondere für die Einlagerung des jeweiligen Pakets.

Eine bevorzugte Weiterbildung der Erfindung zeichnet sich dadurch aus, dass Pakete, die an dem Übergabepunkt während des ursprünglichen Übergabezeitraums nicht abgeholt werden, nach Ablauf des Übergabezeitraums zu einer Transfereinrichtung transportiert werden.

Eine zweckmäßige Ausgestaltung der der Erfindung sieht vor, dass in einer der Lagereinrichtungen gelagerte Pakete auf eine empfangene Ausgabeaufforderung hin innerhalb der Lagereinrichtung durch eine Transporteinheit in eine Übergabeeinrichtung transportiert und dort den Empfängern der Pakete zugänglich gemacht werden und/oder mittels einer Übergabeeinheit zu jeweiligen Empfängern transportiert werden und dass die Pakete durch die Übergabeeinheit den jeweiligen Empfängern zugänglich gemacht werden.

Eine bevorzugte Weiterbildung der Erfindung zeichnet sich dadurch aus, dass eine Einlieferung eines Pakets in die Lagereinrichtung folgende Verfahrensschritte beinhaltet:
- Erfassen wenigstens eines Paketidentifikationsmerkmals, gegebenenfalls auch durch eine Benutzerkomponente;
- Aktivierung einer Übergabeeinrichtung;
- Zuordnung einer Lagerposition einer Lagereinrichtung der Lagereinrichtung zu dem Paket unter Berücksichtigung des Paketidentifikationsmerkmals;
- Transport des Pakets in eine Lagerposition einer Lagereinrichtung der Lagereinrichtung.

Eine zweckmäßige Ausgestaltung der der Erfindung sieht vor, dass eine Einlieferung eines Paketes durch einen Einlieferer an einer Übergabeeinheit folgende Verfahrensschritte beinhaltet:
- Aktivierung der Übergabeeinheit;
- Erfassen wenigstens eines Paketidentifikationsmerkmals, gegebenenfalls auch durch eine Benutzerkomponente;
- Übergabe des Pakets an die Übergabeeinheit;
- Transport des Pakets zu der Lagereinrichtung;
- Zuordnung einer Lagerposition einer Lagereinrichtung der Lagereinrichtung zu dem Paket unter Berücksichtigung des Paketidentifikationsmerkmals;
- Transport des Pakets in die Lagerposition der Lagereinrichtung der Lagereinrichtung.

Eine bevorzugte Weiterbildung der Erfindung zeichnet sich dadurch aus, dass von einem Bestellsystem zur Bearbeitung von Bestellaufträgen von Kunden eine Bestellung einer Ware wenigstens eines der Kunden als Bestellauftrag angenommen wird, dass auf Grundlage des Bestellauftrages von dem Bestellsystem ein Auftrag zur Durchführung einer Übergabe des Pakets an einen Empfänger an eine Steuerkomponente eines Logistiksystems übermittelt wird, dass der Bestellauftrag ein dem Empfänger zugeordnetes Empfängeridentifikationsangabe beinhaltet, dass die Steuerkomponente überprüft, ob zu dem Empfängeridentifikationsangabe ein Empfängerdatensatz mit Lokalisierungsinformationen vorliegt und dass bei Vorliegen des Empfängerdatensatzes mit Lokalisierungsinformationen wenigstens ein Bearbeitungsvorgang des Logistiksystems unter Berücksichtigung der Lokalisierungsinformationen erfolgt.

Anders als im Stand der Technik, bei dem auch bei Integration von Bestellschnittstellen in Logistiksysteme der Bestellprozess so abläuft, dass der Besteller eines Pakets einen Übergabepunkt auswählt und dass anschließend der Transportprozess des Pakets so gesteuert wird, dass der Transport zu dem ausgewählten Übergabepunkt erfolgt, ermöglicht die vorliegende Erfindung eine flexible Auswahl eines gemeinsamen optimierten Übergabepunktes für das Paket, wobei mehrere Pakete für eine Vielzahl von Empfängern innerhalb des Übergabezeitraumes an einem gemeinsamen optimierten Übergabepunkt bereitgestellt werden.

Anders als bei bekannten Bestellprozessen und Bestellplattformen können bei der Erfindung durch ein Logistiksystem ausgewählte gemeinsame optimierte Übergabepunkte - vorzugsweise mindestens teilweise anstelle von ursprünglich vom Empfänger vorgegebenen Übergabepunkten - berücksichtigt werden. Während der Empfänger im Stand der Technik bei der Bestellung eines Pakets einen hinterlegten Zustellort selbst auswählen muss, sieht eine vorteilhafte Weiterbildung der Erfindung vor, dass das Logistiksystem den optimalen Übergabepunkt, insbesondere als Standort einer in dieser Patentanmeldung beschriebenen Lagereinrichtung auswählt.

Eine zweckmäßige Ausgestaltung der der Erfindung sieht vor, dass sich die Auswahlschritte auf unterschiedliche Zeiträume für eine Optimierung des gemeinsamen Übergabepunktes beziehen.

Eine bevorzugte Weiterbildung der Erfindung zeichnet sich dadurch aus, dass in dem ersten Auswahlschritt allgemeine Standorteigenschaften berücksichtigt werden, dass durch den Auswahlschritt eine Long List aller potenziellen Standorte in eine Liste der für die Übergabe von Paketen grundsätzlich qualifizierten Standorte transformiert wird und dass in dem sich an den ersten Auswahlschritt anschließenden weiteren Auswahlschritt diejenigen Übergabepunkte, insbesondere Standorte für Lagereinrichtungen ermittelt werden, bei denen innerhalb eines als Optimierungszeitraum ermittelten Übergabezeitraums für die Pakete ein jeweiliger Aufwandsparameter für die Inbetriebnahme der Lagereinrichtungen möglichst niedrig ist.

Eine zweckmäßige Ausgestaltung der der Erfindung sieht vor, dass in einem anderen Auswahlschritten vorangehenden Auswahlschritt, insbesondere in dem ersten Auswahlschritt, Standorte, an denen die jeweilige Lagereinrichtung geparkt werden kann, ermittelt und berücksichtigt werden.

Eine bevorzugte Weiterbildung der Erfindung zeichnet sich dadurch aus, dass in einem dritten Auswahlschritt diejenigen Übergabepunkte ermittelt werden, bei denen innerhalb eines als Optimierungszeitraum vorzugsweise ermittelten Übergabezeitraums für die Pakete ein jeweiliger Aufwandsparameter für die Einlieferer und/oder Empfänger von Paketen an den Lagereinrichtungen gering ist.

Eine zweckmäßige Ausgestaltung der der Erfindung sieht vor, dass die einzelnen Pakete vor ihrem Transfer in die Lagerpositionen so gedreht werden, dass sie eine definierte Ausrichtung aufweisen.

Eine bevorzugte Weiterbildung der Erfindung zeichnet sich dadurch aus, dass vorzugsweise für jedes Paket ein Paketidentifikationscode vergeben und/oder erfasst wird und anschließend als primäres Paketidentifikationsmerkmal gespeichert wird, dass dem Paket wenigstens ein von dem primären Paketidentifikationsmerkmal verschiedenes sekundäres Paketidentifikationsmerkmal zugeordnet wird, und dass wenigstens ein Bearbeitungsvorgang des Pakets anhand des sekundären Paketidentifikationsmerkmals durchgeführt wird.

Ein primäres Paketidentifikationsmerkmal im Kontext der vorliegenden Anmeldung ist insbesondere ein Paketidentifikationsmerkmal, das geeignet ist, das Paket, dem es zugeordnet wird, beziehungsweise zugeordnet wird, eindeutig zu identifizieren.

Ein sekundäres Paketidentifikationsmerkmal ist vorzugsweise ein Paketidentifikationsmerkmal, das alleine nicht zu einer Identifikation eines Pakets ausreicht, das aber in Verbindung mit Informationen über einen Bearbeitungsstand des Pakets und/oder wenigstens einem weiteren sekundärem Paketidentifikationsmerkmal und/oder wenigstens einem primären Paketidentifikationsmerkmal zu einer Identifikation des Pakets dient.

Alternativ und/oder zusätzlich ist es möglich, Paketidentifikationsmerkmale hinsichtlich ihres Vorhandenseins bei einer Einlieferung in das Logistiksystem voneinander zu unterscheiden.

Originäre Paketidentifikationsmerkmale sind vorzugsweise solche Paketidentifikationsmerkmale, die vor Einlieferung des Pakets in das Logistiksystem oder bei einer Einlieferung des Pakets in das Logistiksystem dem Paket zugeordnet werden.

Nicht originäre Paketidentifikationsmerkmale sind Identifikationsmerkmale des Pakets, die nach der Einlieferung des Pakets in das Logistiksystem verändert werden können. Insbesondere können variable Empfängerattribute Bestandteile von nicht originären Paketidentifikationsmerkmalen sein.

Eine zweckmäßige Ausgestaltung der der Erfindung sieht vor, dass der Paketidentifikationscode durch ein Logistiksystem oder eine Steuerkomponente des Logistiksystems aus mindestens einem von dem Versender übermittelten Merkmal des Pakets gebildet wird, wobei dieses Merkmal so beschaffen ist, dass es bei wenigstens einem der Bearbeitungsvorgänge des Pakets erfasst und bei der Bearbeitung des Pakets berücksichtigt wird.

Eine bevorzugte Weiterbildung der Erfindung zeichnet sich dadurch aus, dass der Paketidentifikationscode durch ein Logistiksystem oder eine Steuerkomponente des Logistiksystems aus mindestens zwei von dem Versender übermittelten Merkmalen des Pakets gebildet werden, wobei diese Merkmale so beschaffen sind, dass sie gemeinsam bei wenigstens einem der Bearbeitungsvorgänge des Pakets erfasst werden und dass der Paketidentifikationscode bei mindestens einem Bearbeitungsvorgang des Pakets berücksichtigt wird.

Eine zweckmäßige Ausgestaltung der der Erfindung sieht vor, dass das sekundäre Paketidentifikationsmerkmal leichter und/oder schneller identifizierbar ist als das primäre Paketidentifikationsmerkmal.

Eine bevorzugte Weiterbildung der Erfindung zeichnet sich dadurch aus, dass das sekundäre Paketidentifikationsmerkmal alleine oder in Kombination mit weiteren sekundären Paketidentifikationsmerkmalen zur Kontrolle einer Richtigkeit, dass ein Paket das durch das primäre Paketidentifikationsmerkmal identifizierte Paket ist, und/oder zur Steuerung eines weiteren Bearbeitungsvorganges eingesetzt wird.

Eine zweckmäßige Ausgestaltung der der Erfindung sieht vor, dass das primäre Paketidentifikationsmerkmal für eine Bildung eines digitalen Zwillings des Pakets eingesetzt wird und mindestens eines der sekundären Paketidentifikationsmerkmale einem digitalen Zwilling des Pakets zugeordnet wird.

Eine bevorzugte Weiterbildung der Erfindung zeichnet sich dadurch aus, dass der Paketidentifikationscode ein physischer Code oder eine Kombination von physischen Codes ist, der oder die unmittelbar mit dem Paket verbunden ist/sind und auslesbar ist/sind.

Eine zweckmäßige Ausgestaltung der der Erfindung sieht vor, dass anhand eines mit dem Paket verbundenen auslesbaren Datenträgers eines Versenders ein primäres Paketidentifikationsmerkmal überprüft wird, und dass das primäre Paketidentifikationsmerkmal bei wenigstens einem Bearbeitungsvorgang des Pakets berücksichtigt wird.

Eine bevorzugte Weiterbildung der Erfindung zeichnet sich dadurch aus, dass wenigstens eine der folgenden Eigenschaften eines Pakets als sekundäres Paketidentifikationsmerkmal erfasst und bei der Durchführung wenigstens eines Bearbeitungsvorgangs berücksichtigt wird:
- Gewicht des Pakets;
- Abmaße des Pakets;
- Form des Pakets;
- Versenderidentifikationsmerkmale;
- Abbildung des Pakets;
- Farbe des Pakets;
- Dateninhalte eines auslesbaren Datenträgers;
- Informationen über eine oder mehrere abgeschlossene Bearbeitungsvorgänge;
- spektroskopischer Response des Pakets.

Eine zweckmäßige Ausgestaltung der der Erfindung sieht vor, dass wenigstens einer der nachfolgend genannten Bearbeitungsvorgänge der Pakete unter Berücksichtigung von wenigstens zwei voneinander verschiedenen Paketidentifikationsmerkmalen durchgeführt wird:
- Einlieferung von Paketen;
- Auswahlverfahren (Ermittlungsverfahren) für die Ermittlung eines gemeinsamen optimierten Übergabepunktes für mehrere Empfänger und/ oder Einlieferer;
- Sortierung in Verteilzentren;
- Sortierung an logistischen Knoten;
- Routing im Bereich eines Knotens des Logistiksystems;
- Transport zwischen Verteilzentren;
- Transport zwischen Verteilzentren und logistischen Knoten;
- Transport zwischen logistischen Knoten;
- Sortierung in Zustelldepots;
- Beladung von Lagereinrichtungen:
- autonomer und/ oder teilautonomer Transport zu gemeinsamen optimierten Übergabepunkten;
- autonomer und/ oder teilautonomer Transport zu individuellen Übergabepunkten;
- Übergabe mehrerer Pakete an einem gemeinsamen optimierten Übergabepunkt innerhalb eines Übergabezeitraums;
- Übergabe von Paketen an individuellen Übergabepunkten;
- Annahme/Einlieferung mehrerer Pakete an einem gemeinsamen optimierten Übergabepunkt innerhalb eines Übergabezeitraums;
- Annahme/Einlieferung von Paketen an individuellen Übergabepunkten;
- Einsatz von Lagereinrichtungen für die Lagerung von Paketen;
- Einsatz von Lagereinrichtungen für die Annahme von Paketen;
- Einsatz von Lagereinrichtungen für die Kommissionierung von Paketen;
- Einsatz von Lagereinrichtungen für die Ausgabe von Paketen und
- Einsatz von Lagereinrichtungen als Verkaufseinrichtungen.

Routing im Sinne der vorliegenden Erfindung bezeichnet insbesondere eine Bestimmung einer besonders geeigneten Transportverbindung zwischen Ausgangspunkten (insbesondere aktuellen Positionen der jeweiligen Pakete) und Zielpunkten (insbesondere nachfolgende logistische Knoten).

Logistische Knoten sind insbesondere Netzwerkknoten des Logistiksystems.

Netzwerkknoten des Logistiksystems sind vorzugsweise Bestandteile des Logistiksystems, bei denen Entscheidungen über zu erfolgende Bearbeitungsvorgänge der Pakete umgesetzt werden. Die Durchführung der Bearbeitungsvorgänge der Pakete erfolgt insbesondere durch Bearbeitungseinheiten des Logistiksystems, die sich an den logistischen Knoten befinden. Bei den Bearbeitungsvorgängen an den logistischen Knoten handelt es sich insbesondere um
- Sortiervorgänge, die vorzugsweise in Verteilzentren und/oder in Lagereinrichtungen für Pakete erfolgen,
- Lagervorgänge, die vorzugsweise in Verteilzentren für Pakete und/oder in Lagereinrichtungen erfolgen,
- Routing im Bereich eines Knotens des Logistiksystems.

Eine bevorzugte Weiterbildung der Erfindung zeichnet sich dadurch aus, dass wenigstens zwei der nachfolgend genannten Bearbeitungsvorgänge der Pakete unter Berücksichtigung von wenigstens zwei voneinander verschiedenen Paketidentifikationsmerkmalen durchgeführt werden:
- Einlieferung von Paketen;
- Auswahlverfahren (Ermittlungsverfahren) für die Ermittlung eines gemeinsamen optimierten Übergabepunktes für mehrere Empfänger und/ oder Einlieferer;
- Sortierung in Verteilzentren;
- Sortierung an logistischen Knoten;
- Routing im Bereich eines Knotens des Logistiksystems;
- Transport zwischen Verteilzentren;
- Transport zwischen Verteilzentren und logistischen Knoten;
- Transport zwischen logistischen Knoten;
- Sortierung in Zustelldepots:
- Beladung von Lagereinrichtungen;
- autonomer und/ oder teilautonomer Transport zu gemeinsamen optimierten Übergabepunkten;
- autonomer und/ oder teilautonomer Transport zu individuellen Übergabepunkten;
- Übergabe mehrerer Pakete an einem gemeinsamen optimierten Übergabepunkt innerhalb eines Übergabezeitraums;
- Übergabe von Paketen an individuellen Übergabepunkten;
- Annahme mehrerer Pakete an einem gemeinsamen optimierten Übergabepunkt innerhalb eines Übergabezeitraums;
- Annahme von Paketen an individuellen Übergabepunkten;
- Einsatz von Lagereinrichtungen für die Lagerung von Paketen;
- Einsatz von Lagereinrichtungen für die Annahme von Paketen;
- Einsatz von Lagereinrichtungen für die Kommissionierung von Paketen;
- Einsatz von Lagereinrichtungen für die Ausgabe von Paketen und
- Einsatz von Lagereinrichtungen als Verkaufseinrichtungen.

Eine zweckmäßige Ausgestaltung der Erfindung sieht vor, dass zwei voneinander verschiedene sekundäre Paketidentifikationsmerkmale für die Identifikation des Pakets eingesetzt werden.

Eine bevorzugte Weiterbildung der Erfindung zeichnet sich dadurch aus, dass eine Einlieferung eines Paketes durch einen Einlieferer wenigstens einen der folgenden Verfahrensschritte beinhaltet:
- Erfassen wenigstens eines der Paketidentifikationsmerkmale, gegebenenfalls auch durch eine Benutzerkomponente;
- Übergabe des Pakets an eine Übergabeeinheit und/oder eine Übergabeeinrichtung;
- Transport des Pakets zu der Lagereinrichtung;
- Transport des Pakets in eine Lagerposition einer Lagereinrichtung der Lagereinrichtung.

Eine zweckmäßige Ausgestaltung der der Erfindung sieht vor, dass nach der Festlegung und/oder Ermittlung des Paketidentifikationscodes oder sonstiger Paketidentifikationsmerkmale, die eine eindeutige/zuverlässige Identifikation eines Paketes erlauben, ein gesteuerter und/oder gemessener Transportweg und/oder Sortierweg des Pakets geplant und/oder nachverfolgt wird, so dass ein nachfolgender Bearbeitungsvorgang des Pakets, insbesondere eine Sortierung des Pakets und/oder ein Transport des Pakets anhand einer Kombination des zuvor festgestellten Paketidentifikationscodes und/oder Paketidentifikationsmerkmals mit einer Ermittlung eines anderen, vorzugsweise leichter und/oder schneller messbaren sekundären Paketidentifikationsmerkmals so präzise durchgeführt wird, wie dies bei einer Ermittlung des Paketidentifikationscodes selbst der Fall ist.

Die Erfindung betrifft ferner eine Lagereinrichtung, insbesondere zur Verwendung in einem der in dieser Anmeldung dargestellten Verfahren und/oder in einem der in dieser Anmeldung dargestellten Logistiksysteme.

Eine bevorzugte Ausgestaltung der Lagereinrichtung zeichnet sich dadurch aus, dass sie als mobile Lagereinrichtung für eine Lagerung und Bereitstellung mehrerer Pakete innerhalb eines vorgesehenen Übergabezeitraums an einem Standort als gemeinsamen optimierten Übergabepunkt für die Übergabe der mehreren Pakete an die jeweiligen Empfänger und/oder von Einlieferern der mehreren Pakete ausgebildet ist, dass die Lagereinrichtung mit einem Zuordnungsmittel für eine Zuordnung von Paketidentifikationsmerkmalen zu den Lagerpositionen verbindbar ist, dass sich in der Lagereinrichtung wenigstens ein Transportweg befindet, wobei sich entlang des Transportweges wenigstens eine Transporteinheit bewegen kann, wobei die Transporteinheit so eingerichtet, dass sie eine Entnahme von Paketen aus einem Sendungsstrom von Paketen insbesondere anhand von Paketidentifikationsmerkmalen unterstützen kann, dass unter Einsatz der Transporteinheit ein Transport der Pakete von dem Sendungsstrom in Lagerpositionen der Lagereinrichtung ermöglicht wird, und dass der Transport der Pakete durch die Transporteinheiten innerhalb der Lagereinrichtung unter Berücksichtigung der den jeweiligen Paketen anhand der Paketidentifikationsmerkmale zugeordneten Lagerpositionen steuerbar ist.

Eine vorteilhafte Weiterbildung der Lagereinrichtung zeichnet sich dadurch aus, dass die Transporteinheit so eingerichtet ist, dass ein Transport von Paketen anhand von Paketidentifikationsmerkmale aus den zugeordneten Lagerpositionen in der Lagereinrichtung zu einer Übergabeeinrichtung ermöglicht wird.

Eine zweckmäßige Ausgestaltung der Erfindung sieht vor, dass die Lagereinrichtung mindestens eine Übergabeeinrichtung für Übergaben von Paketen an gemeinsamen Übergabepunkten und mindestens eine Übergabeeinheit für Übergaben an von den gemeinsamen Übergabepunkten verschiedenen individuellen Übergabepunkten aufweist.

Eine vorteilhafte Weiterbildung der Lagereinrichtung zeichnet sich dadurch aus, dass sie mindestens eine Transporteinheit, die innerhalb und außerhalb der Lagereinrichtung verfahrbar ist, enthält.

Eine zweckmäßige Ausgestaltung der Transfereinrichtung zeichnet sich dadurch aus, dass sie mindestens eine Transporteinheit, die innerhalb der Transfereinrichtung und innerhalb der Lagereinrichtung verfahrbar ist, enthält.

Eine vorteilhafte Weiterbildung der Erfindung sieht vor, dass die Übergabeeinrichtung und/oder eine Übergabeeinheit als eine Ausgabeeinheit für eine Ausgabe von Paketen an Empfänger und/oder als eine Annahmeeinheit für eine Annahme von Paketen eines Einlieferers ausgebildet sind.

Eine vorteilhafte Weiterbildung der Lagereinrichtung zeichnet sich dadurch aus, dass die Transporteinheit von einem Standort der Lagereinrichtung ausgehend autonom einen Transport als Übergabeeinheit zu dem individuellen Übergabepunkt für den einzelnen Empfänger und/oder für den einzelnen Einlieferer durchführen kann und an dem individuellen Übergabepunkt die Ausgabe des Pakets an den Empfänger und/oder die Annahme des Pakets von dem Einlieferer durchführen kann.

Eine zweckmäßige Ausgestaltung der Erfindung sieht vor, dass die Lagereinrichtung für eine Lagerung und Bereitstellung mehrerer Pakete ausgebildet ist und dass sie wenigstens zwei verschiedene Belademodi und/oder wenigstens zwei verschiedene Entlademodi aufweist.

Eine vorteilhafte Weiterbildung der Lagereinrichtung zeichnet sich dadurch aus, dass in einem ersten Belademodus eine unterbrechungsfreie Wegstrecke zwischen einer Umgebung der Lagereinrichtung und einem Innenraum der Lagereinrichtung gebildet ist.

Unterbrechungsfreie Wegstrecke bezeichnet insbesondere eine Konfiguration, bei der ein möglicher Transportweg des Pakets und/oder einer für den Transport des Pakets_eingerichteten Transporteinheit nicht unterbrochen wird, das heißt vor allem weder durch eine Schleuse, eine Barriere oder ein sonstiges Hindernis unterbrochen wird.

Eine zweckmäßige Ausgestaltung der Lagereinrichtung sieht vor, dass in einem zweiten Belademodus eine individuelle Einlagerung eines Pakets unter Einsatz einer Schleuse erfolgen kann.

Eine vorteilhafte Weiterbildung der Lagereinrichtung zeichnet sich dadurch aus, dass in einem ersten Entlademodus eine unterbrechungsfreie Wegstrecke zwischen einem Innenraum der Lagereinrichtung und einer Umgebung der Lagereinrichtung gebildet ist.

Eine zweckmäßige Ausgestaltung der Lagereinrichtung sieht vor, dass in einem zweiten Entlademodus eine individuelle Übergabe eines Pakets an einen Empfänger unter Einsatz der Schleuse erfolgen kann.

Eine vorteilhafte Weiterbildung der Lagereinrichtung zeichnet sich dadurch aus, dass die mobile Lagereinrichtung als Logistikfahrzeug ausgebildet ist.

Eine zweckmäßige Ausgestaltung der Lagereinrichtung sieht vor, dass sie eine Tür aufweist, die so weit wie möglich die gesamte Rückseite der Lagereinrichtung einnimmt.

Erfindungsgemäß wird ferner eine Lagereinrichtung, insbesondere eine der in dieser Anmeldung dargestellten Lagereinrichtungen zur Durchführung eines Verfahrens zur Übergabe einer Vielzahl von Paketen an mehrere Empfänger und/ oder zur Entgegennahme einer Vielzahl von Paketen von mehreren Einlieferern, verwendet, wobei für mehrere Pakete aus einer Vielzahl möglicher räumlich voneinander getrennter Übergabepunkte unter Berücksichtigung wenigstens eines Aufwandsparameters ein gemeinsamer optimierter Übergabepunkt für die Übergabe an die jeweiligen Empfänger und für die Entgegennahme von den Einlieferern innerhalb eines bestimmten Übergabezeitraums ermittelt wird, und dass die Übergabe an die Empfänger und/oder die Entgegennahme von den Einlieferern an dem zugeordneten gemeinsamen optimierten Übergabepunkt innerhalb des vorgesehenen Übergabezeitraums erfolgt.

Eine vorteilhafte Weiterbildung der Verwendung der Lagereinrichtung zeichnet sich dadurch aus, dass die Lagereinrichtung im Bereich eines Verteilzentrums und/ oder eines Zustelldepots als Zwischenspeicher für Pakete eingesetzt wird.

Eine bevorzugte Weiterbildung der Verwendung der Lagereinrichtung zeichnet sich dadurch aus, dass die Lagereinrichtung während einer Aufstellung an einem gemeinsamen optimierten Übergabepunkt innerhalb eines vorgesehenen Übergabezeitraums an einem gemeinsamen optimierten Übergabepunkt für eine gemeinsame Lagerung mehrerer Pakete und für die Übergabe an Empfänger und/oder von Einlieferern der mehreren Pakete bereitgestellt wird und dass die Lagereinrichtung während einer Aufstellung im Bereich eines Verteilzentrums und/oder einer Zustelldepot als Zwischenspeicher für Pakete eingesetzt wird.

Die Erfindung betrifft ferner ein System zur Übergabe einer Vielzahl von Paketen an mehrere Empfänger und/oder zur Entgegennahme einer Vielzahl von Paketen von mehreren Einlieferern.

Erfindungsgemäß zeichnet sich das System dadurch aus, dass es zur Durchführung eines Verfahrens zur Übergabe einer Vielzahl von Paketen an mehrere Empfänger und/oder zur Entgegennahme einer Vielzahl von Paketen von mehreren Einlieferern eingerichtet ist, dass für mehrere Pakete aus einer Vielzahl möglicher räumlich voneinander getrennter Übergabepunkte unter Berücksichtigung wenigstens eines Aufwandsparameters jeweils ein gemeinsamer optimierter Übergabepunkt für die Übergabe an die jeweiligen Empfänger und/oder für die Entgegennahme von den Einlieferern innerhalb eines bestimmten Übergabezeitraums ermittelt werden kann und dass die Übergabe an die Empfänger und die Entgegennahme von den Einlieferern an dem zugeordneten gemeinsamen optimierten Übergabepunkt innerhalb des vorgesehenen Übergabezeitraums erfolgen kann, und dass das System wenigstens ein Verteilzentrum und/oder wenigstens ein Zustelldepot aufweist und dass das System im Bereich des wenigstens einen Verteilzentrums und/oder des wenigstens einen Zustelldepots wenigstens ein Mittel zum Transfer der Pakete an eine Transfereinrichtung aufweist, dass das System eine Steuerkomponente aufweist, wobei die Steuerkomponente so eingerichtet ist, dass die Steuerkomponente die Transfereinrichtung so steuern kann, dass die Transfereinrichtung den Transport der Pakete entsprechend Steueranweisungen der Steuerkomponente durchführen kann, wobei die Pakete im Bereich der Transfereinrichtung als einzelne Pakete durch Transporteinheiten transportiert werden.

Eine vorteilhafte Weiterbildung des Systems zeichnet sich dadurch aus, dass es eine Vielzahl von Lagereinrichtungen aufweist, wobei wenigstens ein Teil der Lagereinrichtungen als mobile Lagereinrichtungen ausgebildet ist, und dass die Steuerkomponente ferner so eingerichtet ist, dass sie einen Transport der mobilen Lagereinrichtungen von der Transfereinrichtung zu Aufstellorten als gemeinsame optimierte Übergabepunkte für die Übergabe der Pakete steuern kann.

Eine zweckmäßige Ausgestaltung des Systems sieht vor, dass es ein Mittel zur Auswahl eines gemeinsamen optimierten Übergabepunktes aus der Vielzahl der möglichen Übergabepunkte für die Übergabe an die jeweiligen Empfänger und/oder zur Entgegennahme von den jeweiligen Einlieferern innerhalb des vorgesehenen Übergabezeitraums aufweist und dass es eine Lagereinrichtung für eine Übergabe an den Empfänger und/oder zur Entgegennahme von den jeweiligen Einlieferern an dem gemeinsamen optimierten Übergabepunkt innerhalb des vorgesehenen Übergabezeitraums aufweist.

Eine vorteilhafte Weiterbildung des Systems zeichnet sich dadurch aus, dass zusätzlich zu den für die Übergabe an den gemeinsamen Übergabepunkten vorgesehenen Paketen Warenobjekte in die Lagereinrichtung eingeliefert, eingelagert und als Pakete übergeben werden können.

Eine zweckmäßige Ausgestaltung des Systems sieht vor, dass mindestens ein Teil der Warenobjekte an der Lagereinrichtung, an der sie als Pakete übergeben wurden, ausgegeben werden kann.

Eine vorteilhafte Weiterbildung des Systems zeichnet sich dadurch aus, dass es ein Mittel zur Erfassung einer Vielzahl von möglichen Standorten für Lagereinrichtungen, insbesondere mobile Lagereinrichtungen, aufweist, und dass es ein Mittel zur Zuordnung der Lagereinrichtungen, insbesondere der mobilen Lagereinrichtungen, zu den gemeinsamen optimierten Übergabepunkten als Standorte für die Lagereinrichtungen, insbesondere die mobilen Lagereinrichtungen, enthält.

Eine zweckmäßige Ausgestaltung des Systems sieht vor, dass es wenigstens ein Mittel zur Steuerung von der Transfereinrichtungen aufweist, wobei die Transfereinrichtungen so gesteuert werden können, dass die für eine Ausgabe an einem Übergabepunkt, insbesondere an einem gemeinsamen optimierten Übergabepunkt vorgesehenen Pakete in die dem Übergabepunkt, insbesondere dem gemeinsamen optimierten Übergabepunkt zugeordnete mobile Lagereinrichtung transportiert werden.

Eine vorteilhafte Weiterbildung des Systems zeichnet sich dadurch aus, dass es Mittel zur Übermittelung von geographischen Informationen zu den gemeinsamen optimierten Übergabepunkten an die Lagereinrichtungen und/oder ein Transportmittel zum Transport der Lagereinrichtungen enthält, so dass ein Transport der Lagereinrichtungen zu den gemeinsamen optimierten Übergabepunkten unter Berücksichtigung der geographischen Informationen erfolgen kann.

Eine zweckmäßige Ausgestaltung des Systems sieht vor, dass es als Logistiksystem mit zugeordnetem Bestellsystem ausgebildet ist, dass das Bestellsystem so ausgestaltet ist, dass für eine Auswahl der gemeinsamen optimierten Übergabepunkte für die Pakete mehrere Übergabepunkte unter Berücksichtigung eines selbstlernendes Systems ausgewählt werden können, und dass die Übergabe an die jeweiligen Empfänger und/oder die Einlieferung durch die jeweiligen Einlieferer an den gemeinsamen optimierten Übergabepunkten unter Berücksichtigung von durch das selbstlernende System ermittelten erwarteten Aufenthaltsorte und/oder Wegstrecken der Empfänger/Einlieferer erfolgt.

Eine vorteilhafte Weiterbildung des Systems zeichnet sich dadurch aus, dass es eine Benutzerkomponente aufweist, die einen Prozessor zur Steuerung von Funktionen der Benutzerkomponente enthält, dass die Benutzerkomponente wenigstens ein Positionsbestimmungsmittel enthält, wobei das Positionsbestimmungsmittel so eingerichtet ist, dass es Positionen der Benutzerkomponente als Lokalisierungsinformationen eines Benutzers der Benutzerkomponente erfassen kann, dass die Benutzerkomponente ein Mittel zum Übertragen der Lokalisierungsinformationen an das System enthält, dass die Benutzerkomponente mit einem gegen unberechtigte Zugriffe besonders geschützten Speichermittel zur Speicherung von Datenschutzanforderungen eines Benutzers der Benutzerkomponente zusammenwirken kann, dass die Datenschutzanforderungen des Benutzers eine ortsabhängige Festlegung, welche Lokalisierungsinformationen zur Lokalisierung der Benutzerkomponente an das System übermittelt werden, beinhalten, dass der Prozessor eine Auswertung vornimmt, in welchem Umfang und/oder mit welcher Genauigkeit eine Übermittelung der Lokalisierungsinformationen den Datenschutzanforderungen des Benutzers entspricht und dass eine Übermittlung der Lokalisierungsinformationen an das System nur in dem Umfang und/oder mit der Genauigkeit erfolgt, die den Datenschutzanforderungen des Benutzers entspricht.

Eine zweckmäßige Ausgestaltung des Systems sieht vor, dass es eine Benutzer-App aufweist und die Benutzer-App eingerichtet ist, Lokalisierungsinformationen eines Benutzers an eine Steuerkomponente des Systems zu übermitteln, wobei die Benutzer-App mit einem gegen unberechtigte Zugriffe besonders geschützten Speichermittel zur Speicherung von Datenschutzanforderungen des Benutzers zusammenwirken kann, dass die Datenschutzanforderungen des Benutzers eine Festlegung, welche Lokalisierungsinformationen zur Lokalisierung der Benutzerkomponente an das System übermittelt werden, beinhalten, dass der Prozessor eine Auswertung vornimmt, in welchem Umfang und/oder mit welcher Genauigkeit eine Übermittelung der Lokalisierungsinformationen den Datenschutzanforderungen des Benutzers entspricht und dass eine Übermittlung der Lokalisierungsinformationen an das System nur in dem Umfang und/oder mit der Genauigkeit erfolgt, die sowohl den Datenschutzanforderungen des Benutzers als auch dem Umfang entspricht, der erforderlich ist, eine Auswahl gemeinsamer optimierter Übergabepunkte durch Übermittelung der Lokalisierungsinformationen zu unterstützen und/oder eine Paketübergabe in unmittelbarer Nähe eines Übergabemittels zu unterstützen.

Eine vorteilhafte Weiterbildung des Systems zeichnet sich dadurch aus, dass die Steuerkomponente Informationen zu Paketidentifikationsmerkmalen an die Transfereinrichtung weitergibt, so dass die Einlagerung der Pakete in die Lagerpositionen der Lagereinrichtungen der Lagereinrichtungen auf Grundlage der Paketidentifikationsmerkmale erfolgen kann.

Eine zweckmäßige Ausgestaltung des Systems sieht vor, dass die Transporteinheiten der Transfereinrichtung zur Unterstützung einer Einlagerung der Pakete in Lagerpositionen von Lagereinrichtungen der Lagereinrichtungen eingerichtet sind.

Eine vorteilhafte Weiterbildung des Systems zeichnet sich dadurch aus, dass die Steuerkomponente Informationen zu Paketidentifikationsmerkmalen an die Transfereinrichtung weitergibt, so dass eine Einlagerung der Pakete in die Lagerpositionen der Lagereinrichtungen der Lagereinrichtungen auf Grundlage der Paketidentifikationsmerkmale erfolgen kann.

Die Erfindung betrifft ferner ein Logistiksystem zur Übergabe einer Vielzahl von Paketen, vorzugsweise zur Verwendung in einem der in dieser Anmeldung offenbarten Verfahren oder mit einem der in dieser Anmeldung offenbarten Systeme, wobei das Logistiksystem so eingerichtet ist, dass es Pakete mehrerer Versender an mehrere Empfänger übergeben kann und wobei das Logistiksystem ferner so eingerichtet ist, dass es wenigstens einen Bearbeitungsvorgang der Pakete anhand eines jeweils den Paketen zugeordneten Paketidentifikationscodes vornehmen kann.

Erfindungsgemäß zeichnet sich das Logistiksystem, beziehungsweise eine Weiterbildung des Logistiksystems dadurch aus, dass die Pakete jeweils wenigstens ein Empfängerattribut aufweisen, dass eine Steuerkomponente des Logistiksystems eine Schnittstelle zum Empfang von Empfängerattributen der Pakete aufweist, dass die Steuerkomponente ein Mittel aufweist um Positionen der Pakete im Laufe ihres Transportweges zu ermitteln und dass die Steuerkomponente ferner so eingerichtet ist, dass sie den mehreren Paketen im Laufe des Transportweges der jeweiligen Pakete in Abhängigkeit der Positionen der Pakete sich verändernde Anteile von ihnen jeweils zugeordneten festen Empfängerattributen und variablen Empfängerattributen zuordnen kann.

Empfängerattribute sind insbesondere Attribute, die Empfängern im Sinne von Merkmalen zugeordnet werden. Es handelt sich um Merkmale, wobei jeder Empfänger durch einzelne, mehrere oder sämtlicher seiner Attribute identifiziert werden kann. Empfängerattribute sind insbesondere Datenelemente, die zu einer Identifikation eines jeweils vorgesehen Empfängers eines Pakets dienen, wobei es vorteilhaft ist, wenigstens für einen Teil der durch ein erfindungsgemäßes Logistiksystem bearbeiteten Pakete sich in Abhängigkeit von einem Bearbeitungszustand des Pakets verändernde Empfänger und / oder sich in Abhängigkeit von einem Bearbeitungszustand des Pakets verändernde Empfängerkreise vorzusehen.

Während in konventionellen Logistiksystemen bereits vor einer Einlieferung von Paketen in das Logistiksystem, beziehungsweise spätestens bei der Einlieferung von Paketen in das Logistiksystem feststeht, an welchen Empfänger das Paket gerichtet ist und welche Adresse der Empfänger aufweist, ermöglicht eine vorteilhafte Weiterbildung der Erfindung eine erheblich höhere Flexibilität einer Zuordnung zwischen Paketen und Empfängern.

Ein Empfängerattribut wird vorzugsweise dann als fest bezeichnet, wenn es vor oder während nachfolgender Bearbeitungsvorgänge des Pakets nicht mehr verändert wird.

Feste Empfängerattribute sind insbesondere Empfängeradressattribute, die bereits für die Bearbeitung des Pakets auf einem Transportweg zu einem Empfänger berücksichtigt wurden

Ein Empfängerattribut wird vorzugsweise dann als variabel bezeichnet, wenn es vor oder während nachfolgender Bearbeitungsvorgänge des Pakets verändert wird beziehungsweise verändert werden kann.

Variable Empfängerattribute sind Empfängerattribute, insbesondere Empfängeradressattribute, die noch nicht für die Bearbeitung des Pakets auf einem Transportweg zu einem Empfänger berücksichtigt wurden und erfindungsgemäß geändert werden können.

Mit der Berücksichtigung in einem Bearbeitungsschritt werden vorzugsweise variable Empfängerattribute zu festen Empfängerattributen verändert. Ebenso vorteilhaft ist es, wenn der Versender zuerst nur wenige Empfängerattribute mitteilt, die bei den ersten Bearbeitungsschritten berücksichtigt werden, und dann vor weiteren Bearbeitungsschritten weitere Empfängerattribute ergänzt.

Ein vorteilhaftes Beispiel eines Empfängerattributs ist ein Empfängeradressattribut, das insbesondere als Attributwert Bestandteile einer physischen Adresse für die Übergabe eines oder mehrerer physischer Pakete enthält.

Empfängerkontaktattribute sind vorzugsweise Bestandteil der Attributwerte von Datenobjekten bezüglich Informationen, die eine Kontaktierung des Empfängers ermöglichen.

Eine Kombination verschiedener Arten von Empfängerattributen ist möglich, so können insbesondere Empfängerkontaktattribute, die eine Kontaktierung des Empfängers ermöglichen, mit Empfängeradressattributen, die ein Routing des Pakets steuern, kombiniert werden.

Beispiele für Empfängerattribute sind:
- die in dieser Anmeldung dargestellten Bestandteile der Adresstiefe, insbesondere Bestandteile einer physischen Adresse eines Empfängers des Pakets, insbesondere
   ∘ Führende Stellen einer Postleitzahl (dies ist auch ein Beispiel für ein Empfängeradressattribut),
   ∘ Weitere Stellen der Postleitzahl (dies ist auch ein Beispiel für ein Empfängeradressattribut),
   ∘ Alternativ oder zusätzlich komplette Postleitzahl (dies ist auch ein Beispiel für ein Empfängeradressattribut),
   ∘ Straße, beziehungsweise Straßenabschnitt (dies ist auch ein Beispiel für ein Empfängeradressattribut),
   ∘ Hausnummer, beziehungsweise Appartementnummer (dies ist auch ein Beispiel für ein Empfängeradressattribut).
- Informationen zu einem gemeinsamen optimierten Übergabepunkt für das Paket (dies ist auch ein Beispiel für ein Empfängeradressattribut);
- Informationen zu einem individuellen Übergabepunkt (dies ist auch ein Beispiel für ein Empfängeradressattribut);
- E-Mail-Adresse des Empfängers (dies ist auch ein Beispiel für ein Empfängerkontaktattribut);
- Telefonnummer des Empfängers (dies ist auch ein Beispiel für ein Empfängerkontaktattribut);
- Benutzername des Empfängers;
- Benutzeridentifikationscode des Empfängers;
- Zahlungskartenidentifikationsnummer, insbesondere Kreditkartenidentifikationsnummer von Kreditkarten:
- Vorhandensein einer geldwerten Information zu einem Zahlungsvorgang (insbesondere einer geldwerten Information, die einen das Paket betreffenden Bezahlvorgang beinhaltet).

Adresstiefe im Sinne der vorliegenden Anmeldung bezeichnet insbesondere die Empfängeradresstiefe, insbesondere die Spezifikation eines physischen Übergabepunktes, insbesondere eines gemeinsamen Übergabepunktes, eines gemeinsamen optimierten Übergabepunktes, eines individuellen Übergabepunktes, insbesondere einer physischen Adresse eines Empfängers.

Empfängerattribute im Sinne der vorliegenden Anmeldung werden insbesondere mit Paketidentifikationsmerkmalen verknüpft, wobei die Verknüpfung insbesondere durch eine Steuerkomponente erfolgt. Die Verknüpfungen zwischen Paketen und Empfängern ermöglichen es dem Logistiksystem und/oder wenigstens einer Komponente des Logistiksystems, ein Paket zu einem Empfänger zuzuordnen.

Es ist besonders vorteilhaft, wenn viele Pakete, insbesondere möglichst viele Pakete von dem Versender beziehungsweise den Versendern mit Paketidentifikationsmerkmalen und/oder Empfängerattributen verknüpft werden.

Obwohl Empfängeradressattribute und Empfängerkontaktattribute besonders bevorzugte Ausführungsformen der Erfindung sind, ist die vorliegende Erfindung nicht auf diese Ausführungsformen von Empfängerattributen beschränkt.

Eine vorteilhafte Weiterbildung des Logistiksystems zeichnet sich dadurch aus, dass mehreren Paketen im Laufe eines Transportweges sich verändernde Anteile von ihnen jeweils zugeordneten festen Empfängerattributen und variablen Empfängerattributen zugeordnet werden.

Anteile von Empfängerattributen sind insbesondere Bestandteile der Empfängerattribute, insbesondere Stellen einer Postleitzahl.

Eine zweckmäßige Ausgestaltung des Logistiksystems sieht vor, dass wenigstens ein Teil der Empfängerattribute Bestandteile einer Empfängeradresstiefe sind, wobei der Anteil der in der Empfängeradresstiefe berücksichtigten, den Paketen jeweils zugeordneten festen Empfängerattribute in einer zeitlichen Abfolge von einzelnen Produktionsstufen eines Logistikunternehmens von einer Übergabe durch den Versender bis zu einer finalen Übergabe an den Empfänger veränderbar ist.

Eine vorteilhafte Weiterbildung des Logistiksystems zeichnet sich dadurch aus, dass Bestandteile der Empfängeradresstiefe führende Stelle einer Postleitzahl und weitere Stellen der Postleitzahl sind.

Eine zweckmäßige Ausgestaltung des Logistiksystems sieht vor, dass eine Straße und/oder ein Straßenabschnitt beziehungsweise eine Hausnummer und/ oder eine Appartementnummer Bestandteile der Empfängeradresstiefe sind.

Eine vorteilhafte Weiterbildung des Logistiksystems zeichnet sich dadurch aus, dass gemeinsame optimierte Übergabepunkte Bestandteile der Empfängeradresstiefe sind.

Eine zweckmäßige Ausgestaltung des Logistiksystems sieht vor, dass individuelle Übergabepunkte Bestandteile der Empfängeradresstiefe sind.

Eine vorteilhafte Weiterbildung des Logistiksystems zeichnet sich dadurch aus, dass eine Steuerkomponente des Logistiksystems über eine Schnittstelle zum Empfang von Anweisungen der Versender Anweisungen der Versender erhält, dass die Anweisungen der jeweiligen Versender jeweils wenigstens eine Anweisung zur Festlegung weiterer oder veränderter variabler Empfängerattribute wenigstens eines ausgewählten Pakets enthalten und dass das Logistiksystem wenigstens einen Bearbeitungsvorgang des ausgewählten Pakets unter Berücksichtigung der dem ausgewählten Paket zugeordneten weiteren oder veränderten variablen Empfängerattribute vornimmt, die dadurch zu festen Empfängerattributen werden.

Eine zweckmäßige Ausgestaltung des Logistiksystems sieht vor, dass ein Paketidentifikationscode zur Identifikation des ausgewählten Pakets eingesetzt wird, und dass wenigstens ein nachfolgender Bearbeitungsvorgang des Pakets sowohl unter Berücksichtigung des dem ausgewählten Paket zugeordneten weiteren oder veränderten Empfängerattributs als auch unter Berücksichtigung des Paketidentifikationscodes durchgeführt wird.

Eine vorteilhafte Weiterbildung des Logistiksystems zeichnet sich dadurch aus, dass der Paketidentifikationscode wenigstens eine Versenderidentifikationsangabe enthält, wobei die Versenderidentifikationsangabe den Versender identifiziert.

Eine zweckmäßige Ausgestaltung des Logistiksystems sieht vor, dass der Paketidentifikationscode als primäres Paketidentifikationsmerkmal gespeichert wird, dass dem Paket wenigstens ein von dem primären Paketidentifikationsmerkmal verschiedenes sekundäres Paketidentifikationsmerkmal zugeordnet wird, und dass wenigstens ein Bearbeitungsvorgang des Pakets anhand des sekundären Paketidentifikationsmerkmals durchgeführt wird.

Eine vorteilhafte Weiterbildung des Logistiksystems zeichnet sich dadurch aus, das sekundäre Paketidentifikationsmerkmal leichter und/oder schneller identifizierbar ist als das primäre Paketidentifikationsmerkmal.

Eine zweckmäßige Weiterbildung des Logistiksystems zeichnet sich dadurch aus, dass sowohl der Paketidentifikationscode als auch wenigstens ein festes Empfängerattribut und/oder wenigstens eines der variablen Empfängerattribute einem digitalen Zwilling des Pakets zugeordnet werden.

Eine vorteilhafte Weiterbildung des Logistiksystems zeichnet sich dadurch aus, dass die Bearbeitungsvorgänge durch eine Bereitstellung von Prozessprotokollen, unter Einbeziehung individueller Prozessprotokolle für die einzelne Pakete ergänzt und die Prozessprotokollen für die Steuerung der Bearbeitungsvorgängen eingesetzt werden.

Ein optionaler Einsatz individueller Prozessprotokolle für einzelne Pakete hat den Vorteil, dass Echtzeitanwendungen implementiert werden können, und/oder dass eine Verknüpfung zwischen einzelnen Paketen und ihren jeweiligen digitalen Zwillingen erleichtert wird.

Eine zweckmäßige Weiterbildung des Logistiksystems zeichnet sich dadurch aus, dass wenigstens einer der nachfolgenden Bearbeitungsvorgänge des Pakets unter Berücksichtigung wenigstens eines der variablen Empfängerattribute durchgeführt wird:
- Einlieferung von Paketen;
- Auswahlverfahren (Ermittlungsverfahren) für die Ermittlung eines gemeinsamen optimierten Übergabepunktes für mehrere Empfänger und/ oder Einlieferer;
- Sortierung in Verteilzentren;
- Sortierung an logistischen Knoten;
- Routing im Bereich eines Knotens des Logistiksystems;
- Transport zwischen Verteilzentren;
- Transport zwischen Verteilzentren und logistischen Knoten;
- Transport zwischen logistischen Knoten;
- Sortierung in Zustelldepots;
- Beladung von Lagereinrichtungen;
- autonomer und/ oder teilautonomer Transport zu gemeinsamen optimierten Übergabepunkten;
- autonomer und/ oder teilautonomer Transport zu individuellen
- Übergabepunkten;
- Übergabe mehrerer Pakete an einem gemeinsamen optimierten Übergabepunkt innerhalb eines Übergabezeitraums;
- Übergabe von Paketen an individuellen Übergabepunkten;
- Annahme mehrerer Pakete an einem gemeinsamen optimierten Übergabepunkt innerhalb eines Übergabezeitraums;
- Annahme von Paketen an individuellen Übergabepunkten;
- Einsatz von Lagereinrichtungen für die Lagerung von Paketen;
- Einsatz von Lagereinrichtungen für die Annahme von Paketen;
- Einsatz von Lagereinrichtungen für die Kommissionierung von Paketen;
- Einsatz von Lagereinrichtungen für die Ausgabe von Paketen und
- Einsatz von Lagereinrichtungen als Verkaufseinrichtungen

Bei den meisten der in diese Anmeldung dargestellten Bearbeitungsvorgänge handelt es sich um logistische Bearbeitungsvorgänge, bei denen die jeweiligen Gegenstände, insbesondere die dargestellten Pakete einschließlich der gleichfalls dargestellten Warenobjekte selbst nicht verändert werden, insbesondere Übergabe, Transport und Sortierung.

Es ist jedoch möglich, zusätzlich Manipulationsvorgänge vorzusehen. Bei einem Manipulationsvorgang wird ein Gegenstand derart bearbeitet, dass sich wenigstens eine seine Eigenschaften verändert. Beispiele für derartige Manipulationsvorgänge, die an sämtlichen der in diese Anmeldung dargestellten Pakete einschließlich der Warenobjekte erfolgen können, sind: Herstellung, Zusammenführung, Reparatur, Zerlegung und Reinigung.

Die Erfindung betrifft ferner eine Verwendung des in dieser Anmeldung dargestellten Logistiksystems zur Durchführung eines der in dieser Anmeldung offenbarten Verfahren zur Übergabe einer Vielzahl von Paketen.

Besonders bevorzugt ist die Verwendung des in dieser Anmeldung offenbarten Logistiksystems zur flexiblen Zuweisung eines finalen Empfängers eines Pakets und/oder eines finalen Übergabepunktes für das Paket.

Die Erfindung kann auch durch nachfolgend dargestellte Merkmale beschrieben werden. Die nachfolgend dargestellten Merkmale können sowohl untereinander als auch mit der darauffolgenden Darstellung bevorzugter Ausführungsbeispiele anhand der Abbildungen kombiniert werden, wobei besonders bevorzugte Merkmalskombinationen durch Verweis auf zuvor dargestellte Merkmalskombinationen hervorgehoben sind.

Gegenstand der Erfindung ist ferner ein Logistiksystem zur Übergabe einer Vielzahl von Paketen an mehrere Empfänger und zur Entgegennahme einer Vielzahl von Paketen von mehreren Einlieferern, dass wenigstens einen der folgenden Bearbeitungsvorgänge an Gegenständen, insbesondere Paketen vornehmen kann:
- Übergabe, insbesondere Einlieferung und/oder Ausgabe,
- Transport,
- Sortierung,
- Lagerung,
- Kommissionierung;
wobei das Logistiksystem die Bearbeitungsvorgänge der Pakete anhand von Paketidentifikationsmerkmalen durchführen kann, wobei das Logistiksystem so eingerichtet ist, dass es den Paketen jeweils wenigstens einen Paketidentifikationscode zuordnen kann, der Paketidentifikationscode oder mindestens ein Bestandteil des Paketidentifikationscodes zu einer eindeutigen Identifikation des Pakets dient, der Paketidentifikationscode oder wenigstens ein Bestandteil des Paketidentifikationscodes ein primäres Paketidentifikationsmerkmal ist, das Logistiksystem wenigstens einen Bearbeitungsvorgang der Pakete anhand des primären Paketidentifikationsmerkmals durchführen kann und das Logistiksystem wenigstens einen weiteren Bearbeitungsvorgang der Pakete anhand eines sekundären Paketidentifikationsmerkmals durchführen kann.

### Gesamtüberblick Logistiksystem und Logistikprozesse

### Paketidentifikationsmerkmal

In der vorliegenden Anmeldung können gleiche, insbesondere gleichbleibende Paketidentifikationsmerkmale und/oder sich von anderen Paketidentifikationsmerkmalen unterscheidende Paketidentifikationsmerkmale zur Identifikation eines Pakets eingesetzt werden.

Wie bereits dargestellt, sind Pakete im Sinne der vorliegenden Erfindung stets physische Gegenstände, insbesondere mit gleichbleibenden physischen Eigenschaften, insbesondere Gewicht und Abmessungen. Es ist somit möglich, während des Aufenthalts des Pakets in einem erfindungsgemäßen Logistiksystem sicherzustellen, dass es sich jeweils um ein bestimmtes Paket handelt. Verschiedene Pakete unterscheiden sich im Regelfall in wenigstens einer physischen Eigenschaft und können durch Messung dieser physischen Eigenschaft voneinander unterscheiden werden. Diese physischen Eigenschaften sind daher als Paketidentifikationsmerkmale bei einer vorteilhaften Weiterbildung der Erfindung einsetzbar.

Bei dem Paketidentifikationsmerkmal kann es sich beispielsweise auch um einen Paketidentifikationscode handeln, der ein Paket eindeutig identifiziert. Ein derartiger Paketidentifikationscode wird beispielsweise auf ein Paket aufgebracht, bevor es an ein Logistiksystem oder eine Einheit des Logistiksystems, beispielsweise eine der in dieser Anmeldung dargestellten Annahmeeinheiten, beispielsweise die dargestellten Lagereinrichtungen übergeben wird, oder der Paketidentifikationscode wird bei einer Einlieferung in das Logistiksystem oder einem der Bearbeitungsvorgänge innerhalb des Logistiksystems auf das Paket aufgebracht.

Von der Erfindung mit umfasst sind Ausführungsformen, bei denen der Paketidentifikationscode ein physischer Code ist, der beispielsweise auf das Paket, eine Umverpackung des Pakets oder auf eine Lagereinheit für das Paket und/oder eine Transporteinheit für das Paket aufgebracht ist und/oder Ausführungsformen, bei denen der Paketidentifikationscode ein digitaler Code ist, welcher dem Paket und/oder einem digitalen Zwilling des Pakets zugeordnet wird.

Es ist vorteilhaft, wenn der jeweilige digitale Zwilling eines der Pakete, vorzugsweise mehrerer Pakete, noch vorteilhafter möglichst vieler Pakete mindestens ein Paketidentifikationsmerkmal enthält. Bei vorteilhaften Ausführungsformen, bei denen das Paket mit einem Paketidentifikationscode verknüpft ist, ist es vorteilhaft, dass der digitale Zwilling des Pakets den Paketidentifikationscode enthält.

Es ist zweckmäßig, wenigstens eine, vorteilhafterweise mehrere, noch vorteilhafter möglichst viele Informationen in den digitalen Zwilling eines Pakets zu integrieren.

Es ist besonders vorteilhaft, Paketidentifikationsmerkmale einzusetzen, die besonders leicht ermittelt werden können. Dies ermöglicht es, die Identität eines Pakets schneller und/oder mit geringerem Aufwand festzustellen.

Eine bevorzugte Ausgestaltung einer erfindungsgemäßen Handhabung von Paketen sieht vor, einen Paketidentifikationscode zu vergeben und/oder zu erfassen und anschließend als primäres Paketidentifikationsmerkmal zu speichern. Zweckmäßigerweise wird wenigsten ein weiteres, leichter und/oder schneller identifizierbares Merkmal des Pakets als sekundäres Paketidentifikationsmerkmal, insbesondere zur Kontrolle einer Richtigkeit des primären Paketidentifikationsmerkmals und/oder zur Steuerung eines weiteren Bearbeitungsvorganges eingesetzt. Beispiele für schneller und/oder mit geringerem Aufwand feststellbare Paketidentifikationsmerkmale sind Gewicht und/oder Abmessungen eines Pakets.

Sowohl das primäre Paketidentifikationsmerkmal als auch das sekundäre Paketidentifikationsmerkmal können Paketidentifikationsmerkmale im Sinne der vorliegenden Erfindung sein, wobei es besonders vorteilhaft ist, Bearbeitungsvorgänge, insbesondere Bearbeitungsvorgänge von Paketen anhand eines dieser Paketidentifikationsmerkmale durchzuführen.

Ein nachfolgender Bearbeitungsvorgang des Pakets kann dann anhand einer Ermittlung des anderen Paketidentifikationsmerkmals durchgeführt werden. Hierzu ist es beispielsweise vorteilhaft, Förderbänder von Transfereinrichtungen mit Kameras zur Erfassung von Abmessungen der Pakete und/oder mit einer Waage auszustatten und/oder Transporteinheiten mit einer Waage auszustatten.

### Benutzer-App

Zweckmäßig ist ferner eine Benutzer-APP zur Erfassung und Verwaltung von Benutzerdaten sowie Kommunikationsschnittstelle und Bedienelement einer Lagereinrichtung.

Es ist besonders vorteilhaft, Benutzern des Logistiksystems, insbesondere Einlieferern oder Empfängern der Pakete insbesondere vor Durchführung der dargestellten Schritte eine App, insbesondere eine Benutzer-App zur Erfassung und Verwaltung von Benutzerdaten sowie Kommunikationsschnittstelle und Bedienelement einer Lagereinrichtung bereitzustellen, die es vorteilhafterweise erlaubt, in dieser Anmeldung dargestellte Verfahren zur Auswahl gemeinsamer optimierter Übergabepunkte durch Übermittelung von Lokalisierungsinformationen der Empfänger und/oder der Einlieferer zu an die Steuerkomponente optimieren.

Hierdurch ist es möglich, diejenigen Lokalisierungsinformationen, die der jeweilige Benutzer unter Berücksichtigung seiner jeweiligen Datenschutz-Anforderungen der Benutzer-App als Komponente des Logistiksystems, vorzugsweise der Steuerkomponente.

### Benutzerdatenbank der Benutzer-App

Eine Benutzerdatenbank dient als Backend-System der Benutzer-App.

### Benachrichtigungskomponente

Benachrichtigungskomponenten können wie bei bestehenden Logistiksystemen eingesetzt werden, wobei es jedoch vorteilhaft ist, zusätzlich die Flexibilität der Auswahl der Lagereinrichtungen zu berücksichtigen.

### Benutzerkomponente

Es ist vorteilhaft, das Logistiksystem, beziehungsweise eine oder mehrere der Komponenten des Logistiksystems so auszugestalten, dass sie über eine Benutzerschnittstelle mit Benutzerkomponenten interagieren, insbesondere auf Anforderungen zur Übergabe von Paketen reagieren können. Bei der Benutzerkomponente handelt es sich beispielsweise um ein Smartphone, eine Smartwatch oder um eine smarte Brille. Insbesondere ist die Benutzerschnittstelle so ausgebildet, dass sie eine Übergabe von Paketen veranlassende und/oder die Übergabe der Pakete verbessernde Informationen übermitteln kann. Beispiele für die übermittelbaren Informationen sind Paketidentifikationsmerkmale, Benutzeridentifikationsmerkmale, Authentifizierungsdaten und Benachrichtigungsinformationen.

### Erläuterung der Abbildungen

### Einleitung

Die vorliegende Anmeldung betrifft ein übergreifendes Konzept, dessen Ziel es ist, Pakete mit möglichst geringem ökologischem Fußabdruck und möglichst hoher Datensicherheit mit weiter verbessertem Schutz von Persönlichkeitsrechten an Empfänger zu übergeben.

Nachfolgend werden anhand dieser Abbildungen vorteilhafte Ausführungsformen eines Verfahrens zur Übergabe einer Vielzahl von Paketen an mehrere Empfänger und/oder zur Einlieferung einer Vielzahl von Paketen mehrerer Einlieferer erläutert.

Von den Abbildungen zeigt:
FIG. 1. einen ersten Ablaufplan zur Durchführung der Erfindung;
FIG. 2. einen zweiten Ablaufplan zur Durchführung der Erfindung;
FIG. 3. einen dritten Ablaufplan zur Durchführung der Erfindung;
FIG. 4. einen vierten Ablaufplan zur Durchführung der Erfindung und
FIG. 5. eine Prinzipdarstellung einer erfindungsgemäßen Handhabung eines Pakets 200.

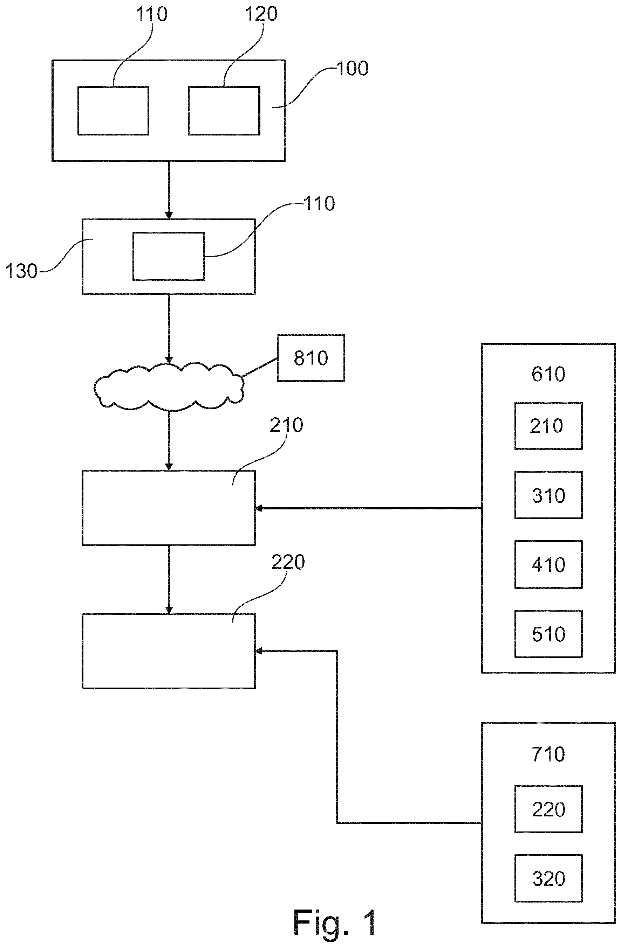

In den Abbildungen 1, 2,3 und 4 wird ein Verfahren dargestellt, bei dem bei einem Bestellvorgang 100 eines Paketes 200 zwei voneinander unabhängige Empfängeridentifikationsangaben 110, 120 erfasst und hinterlegt werden, wobei eine der Empfängeridentifikationsangaben eine Empfängeridentifikationsangabe 110 einer Lagereinrichtung 210 ist und wobei eine andere Empfängeridentifikationsangabe eine Empfängeridentifikationsangabe 120 eines erstbestimmten Empfängers 220 ist.

Wenigstens ein Bearbeitungsvorgang 130 des Pakets 200 erfolgt unter Berücksichtigung der Empfängeridentifikationsangabe 110 der Lagereinrichtung 210.

Ferner erfolgen weitere Bearbeitungsvorgänge 810 des Pakets, insbesondere Routing, Sortierung, Sortierung und gegebenenfalls eine (Zwischen-)Lagerung des Paket 210, so dass das Paket zu einer finalen Lagereinrichtung 210, 310 transportiert wird.

In der finalen Lagereinrichtung 210, 310 wird das Paket gelagert und zur Vorbereitung einer Übergabe bereitgestellt.

Es ist besonders vorteilhaft, dass ein Benutzerendgerät eines finalen Empfängers 220,320 einen Einmalcode des Benutzerendgeräts unter Berücksichtigung einer Empfängeridentifikationsangabe des finalen Empfängers, eines Standortes der finalen Lagereinrichtung 210, 310 und eines Zeitstempels des Übergabezeitpunktes bildet, dass die finale Lagereinrichtung 210, 310 mit einer Prüfungseinheit verbindbar ist, dass die Prüfungseinheit einen Einmalcode der finalen Lagereinrichtung 210,310 unter Berücksichtigung der Empfängeridentifikationsangabe des finalen Empfängers 220,320, des Standortes der finalen Lagereinrichtung 210, 310 und des Zeitstempels des Übergabezeitpunktes bildet, dass die Prüfungseinheit mit einem Prüfungsschritt überprüft, ob der Einmalcode der finalen Lagereinrichtung 210, 310 und der Einmalcode des Benutzerendgerätes des finalen Empfängers 220,320 übereinstimmen, dass die Prüfungseinheit damit den Einmalcode des finalen Empfängers 220,320 überprüft und dass bei einer erfolgreichen Überprüfung des Einmalcodes eine Übergabe des Pakets autorisiert wird.

In einem optionalen Auswahlschritt 610 wird aus mehreren Lagereinrichtungen 210, 310, 410 und 510 eine Lagereinrichtung als finale Lagereinrichtung ausgewählt.

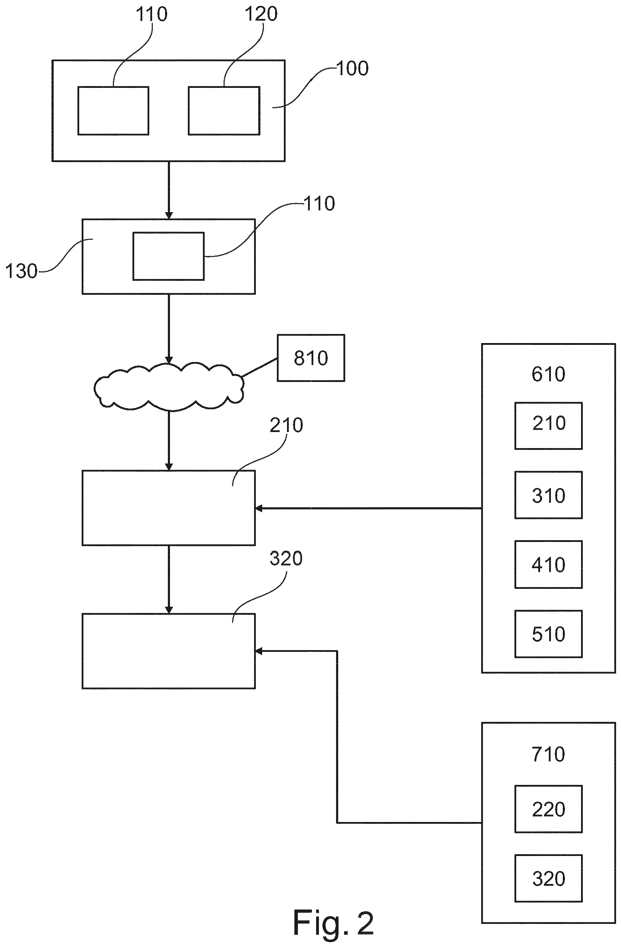

In den Ausführungsformen gemäß der Abbildungen 1 und 2 wird die bei dem Bestellvorgang 100 ausgewählte Lagereinrichtung 210 als finale Lagereinrichtung ausgewählt.

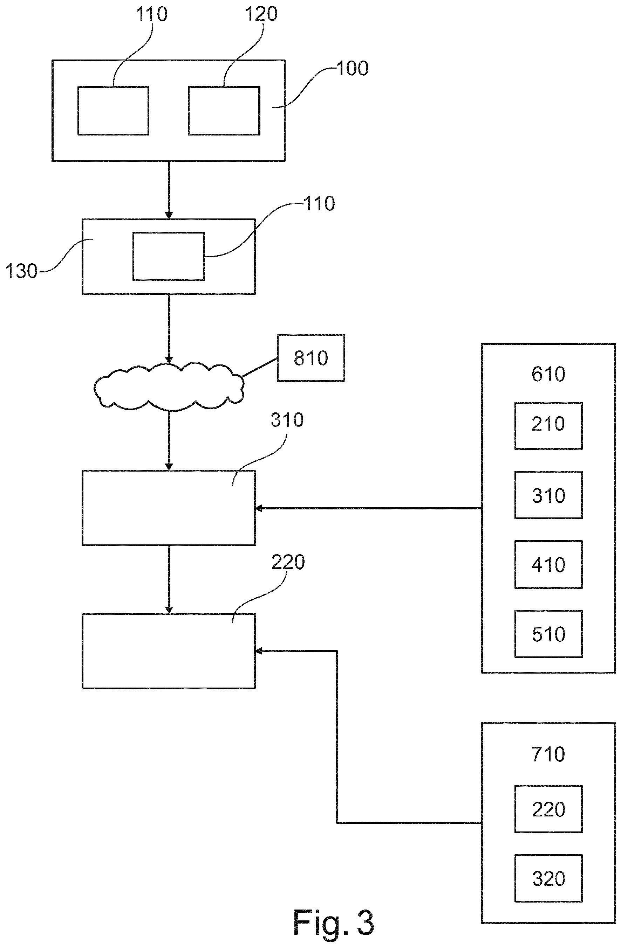

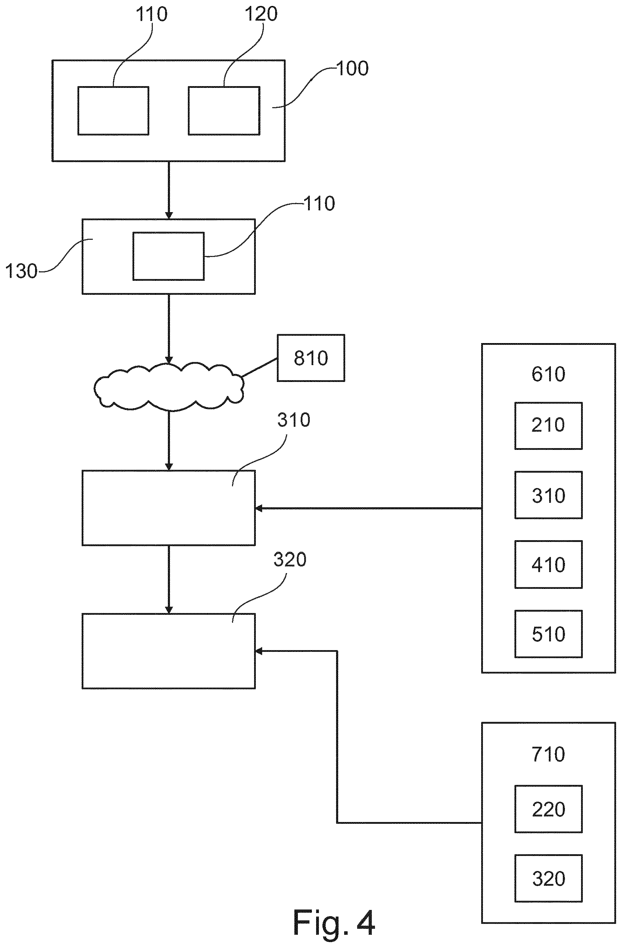

In den Ausführungsformen gemäß der Abbildungen 3 und 4 wird anstelle der bei dem Bestellvorgang 100 ausgewählte Lagereinrichtung 210 eine andere Lagereinrichtung 310 als finale Lagereinrichtung ausgewählt.

In den Ausführungsformen gemäß der Abbildungen 1 und 3 wird der bei dem Bestellvorgang 100 benannte Empfänger 220 als finaler Empfänger ausgewählt.

In den Ausführungsformen gemäß der Abbildungen 2 und 4 wird anstelle des bei dem Bestellvorgang 100 benannten Empfänger 220 ein anderer Empfänger 320 als finaler Empfänger ausgewählt.

In einem gleichfalls optionalen Auswahlschritt 710 erfolgt eine Auswahl, ob der erstbestimmte Empfänger 220 der ein anderer Empfänger 320 als finaler Empfänger 220, 320 des Pakets ausgewählt wird. Die Auswahl erfolgt beispielsweise durch den erstbestimmten Empfänger 220, beispielsweise unter Einsatz einer Benutzer-App.

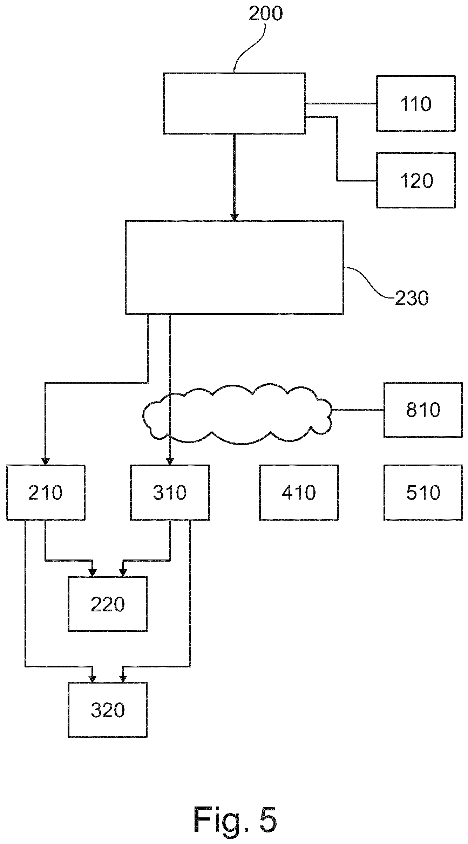

Abbildung 5 zeigt eine Prinzipdarstellung einer erfindungsgemäßen Handhabung eines Pakets 200. Das Paket 200 wird physisch, beispielsweise mit einem Aufdruck oder einem Label oder virtuell, beispielsweise unter Einsatz eines digitalen Zwillings mit Empfängeridentifikationsangaben 110 der erstbestimmten Lagereinrichtung 210 und/oder mit Empfängeridentifikationsangaben 120 des erstbestimmten Empfängers 220 verknüpft.

Wenigstens eine Bearbeitungsschritt 130 in einer Bearbeitungseinheit 230, beispielsweise in einem Router, Sortierer oder Transportmittel erfolgt unter Berücksichtigung der Empfängeridentifikationsangabe 110 der erstbestimmten Lagereinrichtung 210.

Weitere Bearbeitungsschritte 810 erfolgen unter Berücksichtigung der Empfängeridentifikationsangabe 110 der erstbestimmten Lagereinrichtung 210 und/oder unter Berücksichtigung der Empfängeridentifikationsangaben der finalen Lagereinrichtung 210, 310.

Wie zuvor anhand der Abbildungen 1 bis 4 dargestellt, erfolgt die Auswahl der finalen Lagereinrichtung 210, 310 vorzugsweise aus einer Auswahl von Lagereinrichtungen 210, 310, 410, 510, wobei es besonders bevorzugt ist, wenn die erstbestimmte Lagereinrichtung 210 bei der Auswahl der finalen Lagereinrichtung 210, 310 mit berücksichtigt wird.

Wie gleichfalls zuvor anhand der Abbildungen 1 bis 4 dargestellt, ist ein Auswahlschritt zu einem Ersatz des erstbestimmten Empfängers 220 durch einen anderen Empfänger 320 als finalen Empfänger 220 möglich, teilweise vorteilhaft, jedoch nicht notwendig.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

## Patentansprüche

1. Verfahren zur Übergabe einer Vielzahl von Paketen (200) an mehrere Empfänger und/oder zur Entgegennahme von Paketen mehrerer Einlieferer, wobei bei einem Bestellvorgang des Paketes Empfängeridentifikationsangaben erfasst werden,
**dadurch gekennzeichnet,**
**dass** bei dem einem Bestellvorgang eines der Pakete (des Paketes; 200) zwei voneinander unabhängige Empfängeridentifikationsangaben (110, 120) erfasst und hinterlegt werden, wobei eine der Empfängeridentifikationsangaben eine Empfängeridentifikationsangabe (110) einer erstbestimmten Lagereinrichtung (210) ist und wobei eine andere Empfängeridentifikationsangabe eine Empfängeridentifikationsangabe (120) eines erstbestimmten Empfängers (220) ist, dass wenigstens ein Bearbeitungsvorgang (130) des Pakets (200) unter Berücksichtigung der Empfängeridentifikationsangabe (110) der Lagereinrichtung (210) erfolgt, dass das Paket zu einer finalen Lagereinrichtung (210, 310) transportiert, in der finalen Lagereinrichtung (210, 310) gelagert und zur Vorbereitung einer Übergabe des Pakets bereitgestellt wird, dass ein Benutzerendgerät eines finalen Empfängers (220, 320) einen Einmalcode des Benutzerendgeräts unter Berücksichtigung einer Empfängeridentifikationsangabe des finalen Empfängers, eines Standortes der finalen Lagereinrichtung (210, 310) und eines Zeitstempels des Übergabezeitpunktes bildet, dass die finale Lagereinrichtung (210, 310) mit einer Prüfungseinheit verbindbar ist, dass die Prüfungseinheit einen Einmalcode der finalen Lagereinrichtung (210, 310) unter Berücksichtigung der Empfängeridentifikationsangabe des finalen Empfängers (220, 320), des Standortes der finalen Lagereinrichtung (210, 310) und des Zeitstempels des Übergabezeitpunktes bildet, dass die Prüfungseinheit mit einem Prüfungsschritt überprüft, ob der Einmalcode der finalen Lagereinrichtung (210, 310) und der Einmalcode des Benutzerendgerätes des finalen Empfängers (220, 320) übereinstimmen, dass die Prüfungseinheit damit den Einmalcode des finalen Empfängers (220, 320) überprüft und dass bei einer erfolgreichen Überprüfung des Einmalcodes eine Übergabe des Pakets autorisiert wird.

2. Verfahren nach Anspruch 1, **dadurch gekennzeichnet, dass** das Verfahren mit mehreren Bearbeitungskomponenten durchgeführt wird, und dass die Empfängeridentifikationsangabe des Empfängers so gestaltet ist, dass sie keine direkten Rückschlüsse auf eine Identität des Empfängers ermöglicht.

3. Verfahren nach einem der vorigen Ansprüche, **dadurch gekennzeichnet, dass** ein Überprüfungsschritt erfolgt, in dem überprüft wird, ob ein Transport des Pakets zu der Lagereinrichtung, deren Empfänger Identifikationsangaben bei dem Bestellvorgang des Pakets erfasst wurden Als finaler Lagereinrichtung erfolgt, erfolgen soll, oder ob der Transport des Pakets zu einer anderen Lagereinrichtung als Finale Lager Einrichtung erfolgen soll.

4. Verfahren nach einem der vorigen Ansprüche, **dadurch gekennzeichnet, dass** die Empfängeridentifikationsangaben des erstbestimmten Empfängers (220) durch Empfängeridentifikationsangaben eines anderen Empfängers als finalen Empfänger ersetzt werden.

5. Verfahren nach Anspruch 4, **dadurch gekennzeichnet, dass** die Empfängeridentifikationsangaben des finalen Empfängers von dem erstbestimmten Empfänger (220) an eine Prüfungseinheit, die mit der finalen Lagereinrichtung zusammenwirken kann, übermittelt werden.

6. Verfahren nach einem der vorigen Ansprüche, **dadurch gekennzeichnet, dass** der finale Empfänger eine Übergabeeinheit ist, die das Paket an der Lagereinrichtung in Empfang nehmen und zu einem individuellen Übergabepunkt transportieren kann.

7. Verfahren nach einem der vorigen Ansprüche, **dadurch gekennzeichnet, dass** durch ein selbstlernendes System erwartete Aufenthaltsorte des finalen Empfängers ermittelt werden, dass Wegstrecken zwischen den erwarteten Aufenthaltsorten des finalen Empfängers und wenigstens zwei Lagereinrichtungen ermittelt wird und dass die Lagereinrichtung, für welche die Wegstrecke zwischen dem erwarteten Aufenthaltsort des finalen Empfängers und dem Standort der Lagereinrichtung am geringsten ist als finale Lagereinrichtung ausgewählt wird.

8. Verfahren nach einem der vorigen Ansprüche,
**dadurch gekennzeichnet,**
**dass** im Bereich der finalen Lagereinrichtung eine zusätzliche lokale Logistik vorgesehen ist, so dass zusätzlich zu den für die Übergabe an den gemeinsamen Übergabepunkten vorgesehenen Paketen Warenobjekte in die Lagereinrichtung eingeliefert, eingelagert und als Pakete übergeben werden können.

9. Verfahren nach einem der vorigen Ansprüche,
**dadurch gekennzeichnet,**
**dass** für möglichst viele Pakete, vorzugsweise für jedes Paket, ein Paketidentifikationscode vergeben und/oder erfasst wird und anschließend als primäres Paketidentifikationsmerkmal gespeichert wird, dass dem Paket ein Empfängeridentifikationsangabe der finalen Lagereinrichtung als sekundäres Paketidentifikationsmerkmal zugeordnet wird, und dass wenigstens ein Bearbeitungsvorgang des Pakets anhand des sekundären Paketidentifikationsmerkmals durchgeführt wird.

10. Lagereinrichtung, insbesondere zur Verwendung in einem Verfahren nach einem der vorigen Ansprüche,
**dadurch gekennzeichnet,**
**dass** die Lagereinrichtung mit einem Zuordnungsmittel für eine Zuordnung von Empfängeridentifikationsangaben des finalen Empfängers zu den Lagerpositionen verbindbar ist.

11. Logistiksystem zur Übergabe einer Vielzahl von Paketen an mehrere Empfänger und/oder zur Entgegennahme einer Vielzahl von Paketen von mehreren Einlieferern,
**dadurch gekennzeichnet,**
**dass** es aufweist:
- Eine Bestellkomponente zur Erfassung und Hinterlegung von zwei voneinander unabhängige Empfängeridentifikationsangaben (110, 120) einer Lagereinrichtung und eines Empfängers;
- Wenigstens einen Einlieferungspunkt;
- Eine Vielzahl von Lagereinrichtungen;
- Eine Bearbeitungskomponente (230), die wenigstens einen Bearbeitungsvorgang (130) eines Paketes (200) unter Berücksichtigung der Empfängeridentifikationsangabe (110) der Lagereinrichtung (210) durchführen kann,
- Eine Prüfungseinheit, die so eingerichtet ist, dass sie einen Einmalcode der finalen Lagereinrichtung (210,310) unter Berücksichtigung der Empfängeridentifikationsangabe des finalen Empfängers (220,320), des Standortes der finalen Lagereinrichtung (210, 310) und des Zeitstempels des Übergabezeitpunktes bilden kann.

12. Logistiksystem zur Übergabe einer Vielzahl von Paketen an mehrere Empfänger und/oder zur Entgegennahme einer Vielzahl von Paketen von mehreren Einlieferern,
**dadurch gekennzeichnet,**
- **dass** sie ein Mittel zur Auswahl einer finalen Lagereinrichtung aus einer Vielzahl von Lagereinrichtungen enthält.

13. Logistiksystem nach einem der Ansprüche 11 bis 12,
**dadurch gekennzeichnet,**
**dass** es eine Benutzerkomponente aufweist, die einen Prozessor zur Steuerung von Funktionen der Benutzerkomponente enthält, dass die Benutzerkomponente wenigstens ein Positionsbestimmungsmittel enthält, wobei das Positionsbestimmungsmittel so eingerichtet ist, dass es Positionen der Benutzerkomponente als Lokalisierungsinformationen eines Benutzers der Benutzerkomponente erfassen kann, dass die Benutzerkomponente ein Mittel zum Übertragen der Lokalisierungsinformationen an die finale Lagereinrichtung enthält, dass die Benutzerkomponente mit einem gegen unberechtigte Zugriffe besonders geschützten Speichermittel zur Speicherung von Datenschutzanforderungen eines Benutzers der Benutzerkomponente zusammenwirken kann, dass die Datenschutzanforderungen des Benutzers sicherstellen, dass die Lokalisierungsinformationen zur Lokalisierung der Benutzerkomponente an die finale Lagereinrichtung nur dann übermittelt werden, übermittelt werden, der Benutzer sich in Empfangsreichweite eines lokalen Funknetzwerkes der finalen Lagereinrichtung befindet.

14. Logistiksystem nach einem der Ansprüche 11 bis 13,
**dadurch gekennzeichnet,**
**dass** es eine Benutzer-App aufweist und die Benutzer-App eingerichtet ist, dass ein die Benutzer-App einsetzendes Endgerät des finalen Empfängers Positionen der Benutzerkomponente als Lokalisierungsinformationen eines Benutzers der Benutzer-App erfassen kann, dass die Benutzerkomponente ein Mittel zum Übertragen der Lokalisierungsinformationen an die finale Lagereinrichtung enthält, dass die Benutzerkomponente mit einem gegen unberechtigte Zugriffe besonders geschützten Speichermittel zur Speicherung von Datenschutzanforderungen eines Benutzers der Benutzerkomponente zusammenwirken kann, dass die Datenschutzanforderungen des Benutzers sicherstellen, dass die Lokalisierungsinformationen zur Lokalisierung des Endgerätes des Benutzers an die finale Lagereinrichtung nur dann übermittelt werden, übermittelt werden, der Benutzer sich in Empfangsreichweite eines lokalen Funknetzwerkes der finalen Lagereinrichtung befindet.

15. Verwendung eines Logistiksystems nach einem der Ansprüche 11 bis 14 zur Durchführung eines Verfahrens zur Übergabe einer Vielzahl von Paketen nach einem der Ansprüche 1 bis 9.

## Geänderte Patentansprüche

### Geänderte Patentansprüche gemäss Regel 137(2) EPÜ.

1. Lagereinrichtung zur Verwendung in einem Verfahren zur Übergabe einer Vielzahl von Paketen (200) an mehrere Empfänger, wobei bei einem Bestellvorgang des Paketes Empfängeridentifikationsangaben erfasst werden, wobei das Verfahren beinhaltet,
dass bei dem einem Bestellvorgang eines der Pakete (200) zwei voneinander unabhängige Empfängeridentifikationsangaben (110, 120) erfasst und hinterlegt werden, wobei eine der Empfängeridentifikationsangaben eine Empfängeridentifikationsangabe (110) einer erstbestimmten Lagereinrichtung (210) ist und wobei eine andere Empfängeridentifikationsangabe eine Empfängeridentifikationsangabe (120) eines erstbestimmten Empfängers (220) ist, dass wenigstens ein Bearbeitungsvorgang (130) des Pakets (200) unter Berücksichtigung der Empfängeridentifikationsangabe (110) der Lagereinrichtung (210) erfolgt, dass das Paket zu einer finalen Lagereinrichtung (210, 310) transportiert, in der finalen Lagereinrichtung (210, 310) gelagert und zur Vorbereitung einer Übergabe des Pakets bereitgestellt wird, dass ein Benutzerendgerät eines finalen Empfängers (220, 320) einen Einmalcode des Benutzerendgeräts unter Berücksichtigung einer Empfängeridentifikationsangabe des finalen Empfängers, eines Standortes der finalen Lagereinrichtung (210, 310) und eines Zeitstempels des Übergabezeitpunktes bildet, dass die finale Lagereinrichtung (210, 310) mit einer Prüfungseinheit verbindbar ist, dass die Prüfungseinheit einen Einmalcode der finalen Lagereinrichtung (210, 310) unter Berücksichtigung der Empfängeridentifikationsangabe des finalen Empfängers (220, 320), des Standortes der finalen Lagereinrichtung (210, 310) und des Zeitstempels des Übergabezeitpunktes bildet, dass die Prüfungseinheit mit einem Prüfungsschritt überprüft, ob der Einmalcode der finalen Lagereinrichtung (210, 310) und der Einmalcode des Benutzerendgerätes des finalen Empfängers (220, 320) übereinstimmen, dass die Prüfungseinheit damit den Einmalcode des finalen Empfängers (220, 320) überprüft und dass bei einer erfolgreichen Überprüfung des Einmalcodes eine Übergabe des Pakets autorisiert wird und, dass mehrere Logistiksystemen eingesetzt werden, dass die Empfängeridentifikationsangaben so verschlüsselt werden, dass, wenigstens ein Logistiksystems die Empfängeridentifikationsangabe wenigstens eines der Empfänger nicht entschlüsseln kann.

2. Lagereinrichtung nach Anspruch 1,
**dadurch gekennzeichnet,**
**dass** die Lagereinrichtung als finale Lagereinrichtung (210, 310) verwendet wird und dass die finale Lagereinrichtung (210, 310) mit einem Zuordnungsmittel für eine Zuordnung von Empfängeridentifikationsangaben des finalen Empfängers zu den Lagerpositionen verbindbar ist.

3. Logistiksystem zur Übergabe einer Vielzahl von Paketen an mehrere Empfänger, wobei bei einem Bestellvorgang des Paketes Empfängeridentifikationsangaben erfasst werden,
**dadurch gekennzeichnet,**
**dass** es aufweist:
eine Bestellkomponente zur Erfassung und Hinterlegung von zwei voneinander unabhängigen Empfängeridentifikationsangaben (110, 120) einer Lagereinrichtung und eines Empfängers, wobei eine der Empfängeridentifikationsangaben eine Empfängeridentifikationsangabe (110) einer erstbestimmten Lagereinrichtung (210) ist und wobei eine andere Empfängeridentifikationsangabe eine Empfängeridentifikationsangabe (120) eines erstbestimmten Empfängers (220) ist,
wenigstens einen Einlieferungspunkt;
Eine Vielzahl von Lagereinrichtungen;
Ein Mittel zur Auswahl einer finalen Lagereinrichtung (210, 310) aus der Vielzahl von Lagereinrichtungen,
Eine Bearbeitungskomponente (230), die wenigstens einen Bearbeitungsvorgang (130) des Pakets, nämlich eine Sortierung des Pakets und/oder ein Transport des Pakets (Seite 27, erster Absatz) (200) unter Berücksichtigung der Empfängeridentifikationsangabe (110) der Lagereinrichtung (210) durchführen kann, mit einer Prüfungseinheit, die so eingerichtet ist, dass sie einen Einmalcode der finalen Lagereinrichtung (210,310) unter Berücksichtigung der Empfängeridentifikationsangabe des finalen Empfängers (220,320), des Standortes der finalen Lagereinrichtung (210, 310) und des Zeitstempels des Übergabezeitpunktes bildet und dass die Prüfungseinheit einen Einmalcode der finalen Lagereinrichtung (210, 310) unter Berücksichtigung der Empfängeridentifikationsangabe des finalen Empfängers (220, 320), des Standortes der finalen Lagereinrichtung (210, 310) und des Zeitstempels des Übergabezeitpunktes bildet, dass die Prüfungseinheit mit einem Prüfungsschritt überprüft, ob der Einmalcode der finalen Lagereinrichtung (210, 310) und der Einmalcode des Benutzerendgerätes des finalen Empfängers (220, 320) übereinstimmen, dass die Prüfungseinheit damit den Einmalcode des finalen Empfängers (220, 320) überprüft und dass bei einer erfolgreichen Überprüfung des Einmalcodes eine Übergabe des Pakets autorisiert wird (kennzeichnender Teil des ursprünglichen Anspruchs 1), und dass mehrere Logistiksystemen eingesetzt werden, dass die Empfängeridentifikationsangaben so verschlüsselt werden, dass wenigstens ein Logistiksystems die Empfängeridentifikationsangabe wenigstens eines der Empfänger nicht entschlüsseln kann.

4. Logistiksystem nach Anspruch 3,
**dadurch gekennzeichnet,**
**dass** es eine Benutzerkomponente aufweist, die einen Prozessor zur Steuerung von Funktionen der Benutzerkomponente enthält, dass die Benutzerkomponente wenigstens ein Positionsbestimmungsmittel enthält, wobei das Positionsbestimmungsmittel so eingerichtet ist, dass es Positionen der Benutzerkomponente als Lokalisierungsinformationen eines Benutzers der Benutzerkomponente erfassen kann, dass die Benutzerkomponente ein Mittel zum Übertragen der Lokalisierungsinformationen an die finale Lagereinrichtung enthält, dass die Benutzerkomponente mit einem gegen unberechtigte Zugriffe besonders geschützten Speichermittel zur Speicherung von Datenschutzanforderungen eines Benutzers der Benutzerkomponente zusammenwirken kann, dass die Datenschutzanforderungen des Benutzers sicherstellen, dass die Lokalisierungsinformationen zur Lokalisierung der Benutzerkomponente an die finale Lagereinrichtung nur dann übermittelt werden, übermittelt werden, der Benutzer sich in Empfangsreichweite eines lokalen Funknetzwerkes der finalen Lagereinrichtung befindet.

5. Logistiksystem nach einem der Ansprüche 3 oder 4,
**dadurch gekennzeichnet,**
**dass** das Logistiksystem eine Benutzer-App aufweist und die Benutzer-App so eingerichtet ist, dass ein die Benutzer-App einsetzendes Endgerät des finalen Empfängers Positionen als Lokalisierungsinformationen eines Benutzers der Benutzer-App erfassen kann, dass ein Authentifizierungsmodul für einen Austausch von Authentifizierungsinformationen mit der der Benutzer-App bereitgestellt ist, so dass eine Authentifizierung des Benutzers erleichtert wird vorgesehen ist, dass das Authentifizierungsmodul mit einer Steuerkomponente und/oder mit einer lokalen Steuereinheit zusammenwirkt, dass die Authentifizierung des Empfängers durch ein Authentifizierungsmodul erfolgt, dass die Benutzer-App bei Empfang einer Benachrichtigung über die Feststellung einer Nähe des finalen Empfängers zu der Lagereinrichtung in einen anderen Betriebszustand gebracht, insbesondere aktiviert, werden kann.
